(19) **Europäisches Patentamt**
**European Patent Office**
**Office européen des brevets**

(11) **EP 4 365 817 B1**

(12) **EUROPEAN PATENT SPECIFICATION**

(45) Date of publication and mention of the grant of the patent:
**25.09.2024 Bulletin 2024/39**

(21) Application number: **23198613.4**

(22) Date of filing: **20.09.2023**

(51) International Patent Classification (IPC):
**G06Q 50/40** (2024.01)  **G06N 3/088** (2023.01)
**G08G 1/01** (2006.01)

(52) Cooperative Patent Classification (CPC):
**G06Q 50/40; G06N 3/044; G06N 3/045; G06N 3/08; G06N 3/088; G08G 1/127;** G08G 1/005; G08G 1/012; G08G 1/0129; G08G 1/0141

(54) **IDENTIFICATION OF TRANSPORT MODES OF COMMUTERS VIA UNSUPERVISED LEARNING IMPLEMENTED USING MULTISTAGE LEARNER WITH DOMAIN GENERALIZATION**

IDENTIFIZIERUNG VON TRANSPORTMODI VON PENDLERN ÜBER UNÜBERWACHTES LERNEN UNTER VERWENDUNG EINES MEHRSTUFIGEN LERNENDEN MIT DOMÄNENVERALLGEMEINERUNG

IDENTIFICATION DE MODES DE TRANSPORT DE NAVETTEURS PAR APPRENTISSAGE NON SUPERVISÉ MIS EN UVRE À L'AIDE D'UN APPRENANT À PLUSIEURS ÉTAGES AVEC GÉNÉRALISATION DE DOMAINE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **02.11.2022 IN 202221062643**

(43) Date of publication of application:
**08.05.2024 Bulletin 2024/19**

(73) Proprietor: **Tata Consultancy Services Limited Maharashtra (IN)**

(72) Inventors:
• **BANDYOPADHYAY, SOMA**
  **700160 Kolkata, West Bengal (IN)**
• **PAL, ARPAN**
  **700160 Kolkata, West Bengal (IN)**
• **RAMAKRISHNAN, RAMESH KUMAR**
  **560066 Bangalore, Karnataka (IN)**
• **DATTA, ANISH**
  **700160 Kolkata, West Bengal (IN)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
• **SERVIZI VALENTINO ET AL: "Transport behavior-mining from smartphones: a review", EUROPEAN TRANSPORT RESEARCH REVIEW, 6 November 2021 (2021-11-06), Cham, pages 1 - 25, XP055956404, Retrieved from the Internet <URL:https://etrr.springeropen.com/track/pdf/10.1186/s12544-021-00516-z.pdf> [retrieved on 20220830], DOI: 10.1186/s12544-021-00516-z**
• **BANDYOPADHYAY SOMA ET AL: "Hierarchical Clustering using Auto-encoded Compact Representation for Time-series Analysis", ARXIV (CORNELL UNIVERSITY), 11 January 2021 (2021-01-11), XP093132605, Retrieved from the Internet <URL:https://arxiv.org/pdf/2101.03742.pdf> [retrieved on 20240219], DOI: 10.48550/arxiv.2101.03742**
• **SOMA BANDYOPADHYAY ET AL: "Unsupervised Driving Behavior Analysis using Representation Learning and Exploiting Group-based Training", ARXIV.ORG, CORNELL UNIVERSITY LIBRARY, 201 OLIN LIBRARY CORNELL UNIVERSITY ITHACA, NY 14853, 12 May 2022 (2022-05-12), XP091226954**

- **PRABONO ARIA GHORA ET AL: "Atypical Sample Regularizer Autoencoder for Cross-Domain Human Activity Recognition", INFORMATION SYSTEMS FRONTIERS, vol. 23, no. 1, 2 April 2020 (2020-04-02), pages 71 - 80, XP037359254, ISSN: 1387-3326, DOI: 10.1007/S10796-020-09992-5**
- **BANDYOPADHYAY SOMA ET AL: "Generalizable Journey Mode Detection Using Unsupervised Representation Learning", IEEE TRANSACTIONS ON INTELLIGENT TRANSPORTATION SYSTEMS, 1 January 2024 (2024-01-01) - 20 February 2024 (2024-02-20), Piscataway, NJ, USA, pages 1 - 10, XP093132614, ISSN: 1524-9050, Retrieved from the Internet <URL:https://ieeexplore.ieee.org/stampPDF/get PDF.jsp?tp=&arnumber=10400974&ref=aHR0cH M6Ly9pZWVleHBsb3JlLmllZWUub3JnL2RvY3Vt ZW50LzEwNDAwOTc0> DOI: 10.1109/TITS.2023.3348815**

**Description**

CROSS-REFERENCE TO RELATED APPLICATIONS AND PRIORITY

The present application claims priority to Indian application no. 202221068018, filed on 25 November 2022.

TECHNICAL FIELD

The embodiments herein generally relate to the field of automated transport mode identification and, more particularly, to a method and system for identification of transport modes of commuters via unsupervised representation learning implemented using a multistage learner capturing the diversity in the user data with domain generalization.

BACKGROUND

Smart phones equipped with multiple sensors have capability to capture and/or process critical data, enabling monitoring and tracking individuals health, mobility and obtaining derived insights for decision and planning. Automated transport mode detection of a commuter or user in one of the areas where data collected form mobile sensors enables unobtrusive sensing and transport mode analysis. Insights or inferences derived from such data has wide applications in urban planning such as transport management and many other applications.

The approaches found in the literature for the detection of the mode of transportation differ mainly on a) the assumption on the position of the mobile sensor(s), i.e., fixed and known or variable and unknown a priori; b) the number and type of input signals collected; c) the kind and the number of features extracted from the collected data; d) the type of classifier used for the recognition of the mode of transportation on the basis of the extracted features.

Conventional methods exploits GPS / location data to classify different modes of transportation. Obtaining GPS data is challenge in subways, underground metro etc. Also, GPS reveals the location information which is sensitive towards preserving privacy of the users. Furthermore, traditional supervised classification methods mostly rely on hand crafted features which may not distinguish between various transportation modes since they are vulnerable to traffic and environmental conditions. These may not generalize well to varying users and cities. Furthermore, the conventional approaches rely on completely labelled data, however, collecting the labeled data during a user's journey is tedious, time consuming and prone to error/noise.

Servizi Valentino ET AL: "Transport behavior-mining from smartphones: a review" discloses although people and smartphones have become almost inseparable, especially during travel, smartphones still represent a small fraction of a complex multi-sensor platform enabling the passive collection of users' travel behavior. Smartphone-based travel survey data yields the richest perspective on the study of inter- and intrauser behavioral variations. Yet after over a decade of research and field experimentation on such surveys, and despite a consensus in transportation research as to their potential, smartphone-based travel surveys are seldom used on a large scale. This literature review pinpoints and examines the problems limiting prior research, and exposes drivers to select and rank machine-learning algorithms used for data processing in smartphone-based surveys. Findings show the main physical limitations from a device perspective; the methodological framework deployed for the automatic generation of travel-diaries, from the application perspective; and the relationship among user interaction, methods, and data, from the ground truth perspective.

Bandyopadhyay Soma ET AL: "Hierarchical Clustering using Auto-encoded Compact Representation for Time-series Analysis" discloses getting a robust time-series clustering with best choice of distance measure and appropriate representation is always a challenge. Propose a novel mechanism to identify the clusters combining learned compact representation of time-series, Auto Encoded Compact Sequence (AECS) and hierarchical clustering approach. Proposed algorithm aims to address the large computing time issue of hierarchical clustering as learned latent representation AECS has a length much less than the original length of time-series and at the same time want to enhance its performance. Proposed algorithm exploits Recurrent Neural Network (RNN) based under complete Sequence to Sequence(seq2seq) autoencoder and agglomerative hierarchical clustering with a choice of best distance measure to recommend the best clustering. Scheme selects the best distance measure and corresponding clustering for both univariate and multivariate time-series. Experimented with real-world time-series from UCR and UCI archive taken from diverse application domains like health, smart-city, manufacturing etc. Experimental results show that proposed method not only produce close to benchmark results but also in some cases outperform the benchmark.

SOMA BANDYOPADHYAY ET AL: "Unsupervised Driving Behavior Analysis using Representation Learning and Exploiting Group-based Training" discloses a robust driving pattern analysis by capturing variations in driving patterns for addressing diversity in individuals, depending on individual's inherent characteristics and, also based on demographic factors such as age, gender etc.

PRABONO ARIA GHORA ET AL: "Atypical Sample Regularizer Autoencoder for Cross-Domain Human Activity Recognition" discloses the sensor-based human activity recognition (HAR) using machine learning requires a sufficiently large amount of annotated data to realize an accurate classification model. This requirement stimulates the advancement of the transfer learning research area that minimizes the use of labeled data by transferring knowledge from the existing activity recognition domain. Existing approaches transform the data into a common subspace between domains which theoretically loses information, to begin with. Besides, they are based on the linear projection which is bound to linearity assumption and its limitations. Some recent works have already incorporated nonlinearity to find a latent representation that minimizes domain discrepancy based on an autoencoder that includes statistical distance minimization. However, such approach discovers latent representation for both domains at once, which causes sub-optimal representation because both domains compensate each other's reconstruction error during the training. Proposed an autoencoder-based approach on domain adaptation for sensor-based HAR. The proposed approach learns a latent representation which minimizes the discrepancy between domains by reducing statistical distance. Instead of learning representation of both domains simultaneously, our method is a two-phase approach which first learns the representation for the domain of interest independently to ensure its optimality. Subsequently, the useful information from the existing domain is transferred. Tested the proposed approach on the publicly available sensor-based HAR datasets, using cross-domain setup.

SUMMARY

Embodiments of the present disclosure present technological improvements as solutions to one or more of the above-mentioned technical problems recognized by the inventors in conventional systems.

For example, in one embodiment, a method for identification of transport mode of commuters is provided. The method includes receiving an unlabeled time series data for a diversified population of a plurality of commuters, wherein the unlabeled time series data comprising accelerometer data acquired from an accelerometer of a mobile device carried by each of the plurality of commuters during a journey, wherein the journey comprises commute via a plurality of transport modes.

Further, the method includes determining a plurality of stationary segments within the journey of each of the plurality of commuters by: (a)sampling the accelerometer data associated with the journey of each of the plurality of commuters into a plurality of samples; (b)detecting a plurality of end points and a plurality of start points within the plurality of samples that are associated with a plurality of non-stationary segments of the journey, wherein an end point indicating end of a current non-stationary segment is marked when difference between an amplitude of the accelerometer data of two consecutive samples is less or equal to a threshold ($\delta$), and a start point indicating start of a successive non-stationary segment is marked when the difference between the consecutive samples exceeds the threshold ($\delta$); and (c) computing a difference between consecutive end points and start points and identifying time duration between each consecutive non-stationary segments as a stop duration, wherein a journey segment corresponding to a time period of the identified stop duration is considered as a stationary segment.

Further, the method includes eliminating the accelerometer data associated with the plurality of stationary segments. Furthermore, the method includes learning a generalizable Auto-Encoded Compact Sequence (AECS) of the accelerometer data associated with the plurality of non-stationary segments of each of the plurality of commuters to generate a training data, wherein a fixed length latent representation AECS is used to capture a plurality of significant features of the time series data adapting diversity and commonality inside data as Invariant AECS (I-AECS). Further, the method includes training a multistage learner for predicting the plurality of transport modes by applying Hierarchical Clustering (HC) using I-AECS on the training data to generate clusters corresponding to the plurality of transport modes using a best distance measure selected among a plurality of distance measures for clustering.

In another aspect, a system for identification of transport modes is provided. The system comprises a memory storing instructions; one or more Input/Output (I/O) interfaces; and one or more hardware processors coupled to the memory via the one or more I/O interfaces, wherein the one or more hardware processors are configured by the instructions to receive an unlabeled time series data for a diversified population of a plurality of commuters, wherein the unlabeled time series data comprising accelerometer data acquired from an accelerometer of a mobile device carried by each of the plurality of commuters during a journey, wherein the journey comprises commute via a plurality of transport modes.

Further, the one or more hardware processors are configured to determine a plurality of stationary segments within the journey of each of the plurality of commuters by: (a)sampling the accelerometer data associated with the journey of each of the plurality of commuters into a plurality of samples; (b)detecting a plurality of end points and a plurality of start points within the plurality of samples that are associated with a plurality of non-stationary segments of the journey, wherein an end point indicating end of a current non-stationary segment is marked when difference between an amplitude of the accelerometer data of two consecutive samples is less or equal to a threshold ($\delta$), and a start point indicating start of a successive non-stationary segment is marked when the difference between the consecutive samples exceeds the threshold ($\delta$); and (c) computing a difference between consecutive end points and start points and identifying time duration between each consecutive non-stationary segments as a stop duration, wherein a journey segment corresponding to a time period of the identified stop duration is considered as a stationary segment.

Further, the one or more hardware processors are configured to eliminate the accelerometer data associated with the plurality of stationary segments. Furthermore, the one or more hardware processors are configured to learn a generalizable Auto-Encoded Compact Sequence (AECS) of the accelerometer data associated with the plurality of non-stationary segments of each of the plurality of commuters to generate a training data, wherein a fixed length latent representation AECS is used to capture a plurality of significant features of the time series data adapting diversity and commonality inside data as Invariant AECS (I-AECS). Further, the one or more hardware processors are configured to train a multistage learner for predicting the plurality of transport modes by applying Hierarchical Clustering (HC) using I-AECS on the training data to generate clusters corresponding to the plurality of transport modes using a best distance measure selected among a plurality of distance measures for clustering.

In yet another aspect, there are provided one or more non-transitory machine-readable information storage mediums comprising one or more instructions, which when executed by one or more hardware processors causes a method for identification of transport mode of commuters. The method includes receiving an unlabeled time series data for a diversified population of a plurality of commuters, wherein the unlabeled time series data comprising accelerometer data acquired from an accelerometer of a mobile device carried by each of the plurality of commuters during a journey, wherein the journey comprises commute via a plurality of transport modes.

Further, the method includes determining a plurality of stationary segments within the journey of each of the plurality of commuters by: (a)sampling the accelerometer data associated with the journey of each of the plurality of commuters into a plurality of samples; (b)detecting a plurality of end points and a plurality of start points within the plurality of samples that are associated with a plurality of non-stationary segments of the journey, wherein an end point indicating end of a current non-stationary segment is marked when difference between an amplitude of the accelerometer data of two consecutive samples is less or equal to a threshold ($\delta$), and a start point indicating start of a successive non-stationary segment is marked when the difference between the consecutive samples exceeds the threshold ($\delta$); and (c) computing a difference between consecutive end points and start points and identifying time duration between each consecutive non-stationary segments as a stop duration, wherein a journey segment corresponding to a time period of the identified stop duration is considered as a stationary segment.

Further, the method includes eliminating the accelerometer data associated with the plurality of stationary segments. Furthermore, the method includes learning a generalizable Auto-Encoded Compact Sequence (AECS) of the accelerometer data associated with the plurality of non-stationary segments of each of the plurality of commuters to generate a training data, wherein a fixed length latent representation AECS is used to capture a plurality of significant features of the time series data adapting diversity and commonality inside data as Invariant AECS (I-AECS). Further, the method includes training a multistage learner for predicting the plurality of transport modes by applying Hierarchical Clustering (HC) using I-AECS) on the training data to generate clusters corresponding to the plurality of transport modes using a best distance measure selected among a plurality of distance measures for clustering.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1A is a functional block diagram of a system for identification of transport modes of commuters via unsupervised learning implemented using a multistage learner, in accordance with some embodiments of the present disclosure.

FIG. 1B illustrates a schematic overview of the system of FIG. 1A, in accordance with some embodiments of the present disclosure.

FIGS. 2A through 2B (collectively referred as FIG. 2) is a flow diagram illustrating a method for identification of transport modes of commuters via unsupervised learning implemented using the multistage learner, using the system of FIG. 1A, in accordance with some embodiments of the present disclosure.

FIG. 3A depicts detected start points and end points used for identifying stationary journey segments, in accordance with some embodiments of the present disclosure.

FIG. 3B depicts unsupervised learning architecture of the multistage learner, in accordance with some embodiments of the present disclosure.

FIG. 4 depicts inferencing process flow of the trained multistage learner, in accordance with some embodiments of the present disclosure.

FIG. 5A through 5C depicts exemplary multi-stage grouping of user's journey segments by the multistage learner with transport means at first level and vehicle type within the specific transport mean and second level, in accordance with some embodiments of the present disclosure.

FIG. 6A through 6C depicts performance analysis of the multistage learner, in accordance with some embodiments of the present disclosure.

It should be appreciated by those skilled in the art that any block diagrams herein represent conceptual views of illustrative systems and devices embodying the principles of the present subject matter. Similarly, it will be appreciated that any flow charts, flow diagrams, and the like represent various processes which may be substantially represented in computer readable medium and so executed by a computer or processor, whether or not such computer or processor is explicitly shown.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts.

Conventional transport mode detection relies either on GPS data or uses supervised learning for transport mode detection, requiring labelled data with hand crafted features. Collecting the labeled data during a user's journey is tedious, time consuming and prone to error/noise. With scarcity and quality concerns in getting labeled data, affects the training of Machine Learning (ML) models during inferencing of the transport modes.

Embodiments of the present disclosure provide a method and system for identification of transport modes of commuters via unsupervised learning implemented using a multistage learner. Unlabeled time series data is obtained from accelerometer (sensor) of commuters' computing devices (e.g., mobile device) encompassing a diversified population. The accelerometer data is processed using a unique journey segment detection technique to eliminate redundant data corresponding to stationary segments of commuter or user. The method utilizes only accelerometer sensor, without any position or placement constraints on the mobile device while acquiring data instead of using GPS sensor. This enables hazard free collection of journey data, even inside subways or passing through tunnels, where many a times users encounter missing GPS signals.. The unique journey segment detection approach accurately eliminates redundant data corresponding to no mobility phase of user. The elimination of stationary segments is intended to identify only the "in motion segments". These segments correspond to data needed to identify the journey part of different transport modes used by the commuter.

Once the stationary segments are eliminated, non-stationary journey segments are represented using Invariant Auto-Encoded Compact Sequence (I-AECS), which is a learned compact representation of non-stationary journey segments encompassing the common encoded latent feature representation across diverse users and cities, where no annotation or ground truth information is used. I-AECS, interchangeably referred to as Invariant Latent Representation (I-LR) enables capturing diversities with commonality while learning the representation of journey segments across diversified users. The multistage unsupervised learning model, also referred to as multistage learner, utilizes hierarchical clustering to generate clusters using I-AECS. The method does not perform clustering on raw data, rather clustering is performed on top of I-AECS or invariant AECS of the raw data. The method is based on learning representation incorporating diversity and then proceed further utilization on the learned representations. The hierarchical clusters so formed at multiple levels, for example, include (a) a first level based on transport corresponding to vehicle based transport and no-transport mode corresponding to movement of a commuter without a vehicle, (b) at a second level based on road transportation and rail transportation, and (c) at a third level, the cluster corresponding to the road transportation is further divided into car-bus, the cluster corresponding to the rail transportation is further divided into train and subway. In similar manner additional clusters corresponding new modes and sub-modes of transport can also be created as per requirements of end application.

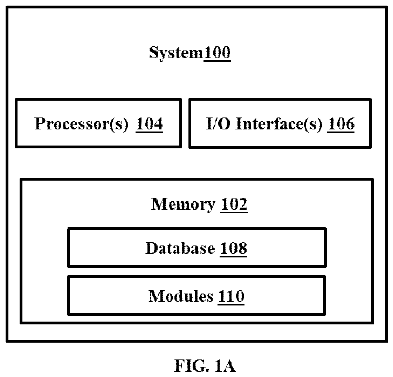

Referring now to the drawings, and more particularly to FIGS. 1A through 6C, where similar reference characters denote corresponding features consistently throughout the figures, there are shown preferred embodiments and these embodiments are described in the context of the following exemplary system and/or method.

FIG. 1A is a functional block diagram of a system 100 for identification of transport modes of commuters via unsupervised learning implemented using a multistage learner, in accordance with some embodiments of the present disclosure. In an embodiment, the system 100 includes a processor(s) 104, communication interface device(s), alternatively referred as input/output (I/O) interface(s) 106, and one or more data storage devices or a memory 102 operatively coupled to the processor(s) 104. The system 100 with one or more hardware processors is configured to execute functions of one or more functional blocks of the system 100.

Referring to the components of system 100, in an embodiment, the processor(s) 104, can be one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In an embodiment, the system 100 can be implemented in a variety of computing systems including laptop computers, notebooks, hand-held devices such as mobile phones (mobile devices), workstations, mainframe computers, servers, and the like.

The I/O interface(s) 106 can include a variety of software and hardware interfaces, for example, a web interface, a graphical user interface to display the generated target images and the like and can facilitate multiple communications within a wide variety of networks N/W and protocol types, including wired networks, for example, LAN, cable, etc., and wireless networks, such as WLAN, cellular and the like. In an embodiment, the I/O interface (s) 106 can include one or more ports for connecting to a number of external devices or to another server or devices.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes.

In an embodiment, the memory 102 includes a plurality of modules 110 such as the multistage learner (not shown), a stationary segment detection module ( not shown) and so on. The plurality of modules 110 include programs or coded instructions that supplement applications or functions performed by the system 100 for executing different steps involved in the process of identification of transport modes of commuters via unsupervised representation learning implemented using the multistage learner of the system 100. The plurality of modules 110, amongst other things, can include routines, programs, objects, components, and data structures, which performs particular tasks or implement particular abstract data types. The plurality of modules 110 may also be used as, signal processor(s), node machine(s), logic circuitries, and/or any other device or component that manipulates signals based on operational instructions. Further, the plurality of modules 110 can be used by hardware, by computer-readable instructions executed by the one or more hardware processors 104, or by a combination thereof. The plurality of modules 110 can also include various sub-modules (not shown) within each module.

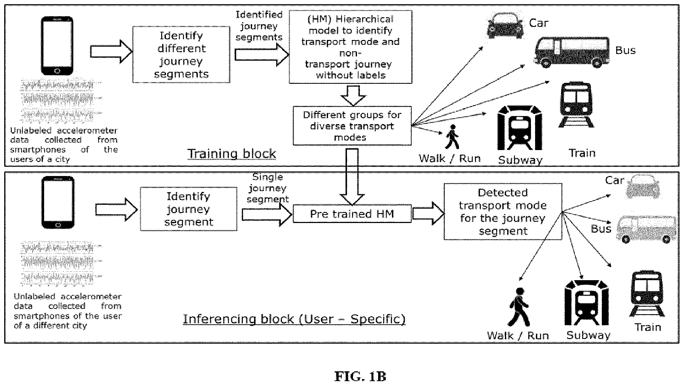

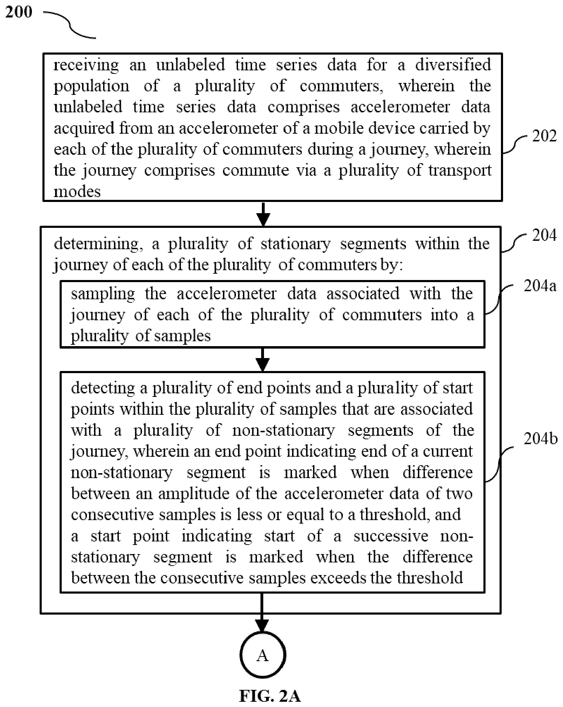

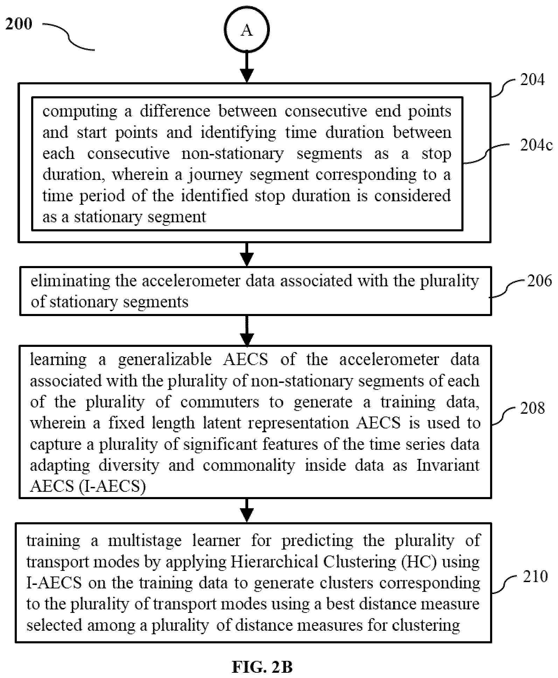

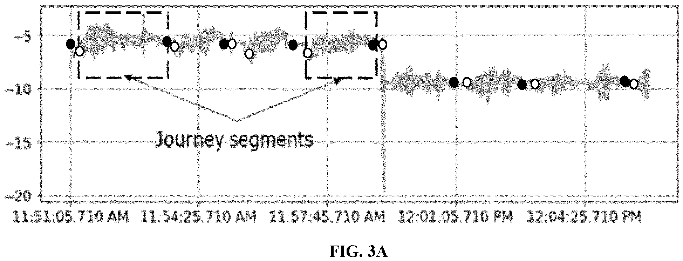

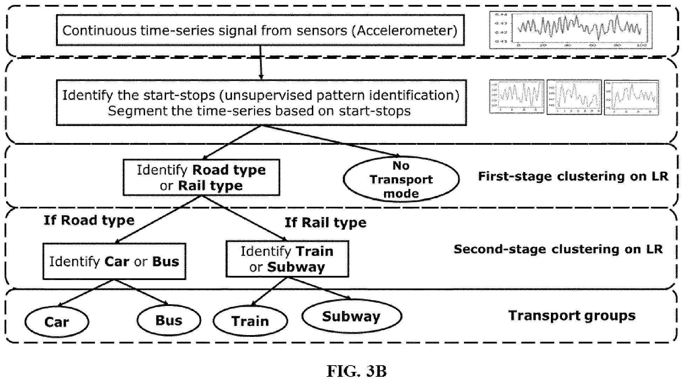

Further, the memory 102 may comprise information pertaining to input(s)/output(s) of each step performed by the processor(s) 104 of the system100 and methods of the present disclosure. Furthermore, the memory 102 includes a database 108. The database (or repository) 108 may include a plurality of abstracted piece of code for refinement and data that is processed, received, or generated as a result of the execution of the plurality of modules 110. Although the database 108 is shown internal to the system 100, it will be noted that, in alternate embodiments, the database 108 can also be implemented external to the system 100, and communicatively coupled to the system 100. The data contained within such external database may be periodically updated. For example, new data may be added into the database (not shown in FIG. 1) and/or existing data may be modified and/or non-useful data may be deleted from the database. In one example, the data may be stored in an external system, such as a Lightweight Directory Access Protocol (LDAP) directory and a Relational Database Management System (RDBMS). Functions of the components of the system 100 are now explained with reference to schematic overview of the system 100 depicted in FIG. 1B, steps of flow diagram of FIG. 2, and FIG. 3.

FIGS. 2A through 2B (collectively referred as FIG. 2) is a flow diagram illustrating a method 200 for identification of transport modes of commuters via unsupervised learning implemented using the multistage learner, using the system of FIG. 1A, in accordance with some embodiments of the present disclosure.

In an embodiment, the system 100 comprises one or more data storage devices or the memory 102 operatively coupled to the processor(s) 104 and is configured to store instructions for execution of steps of the method 200 by the processor(s) or one or more hardware processors 104. The steps of the method 200 of the present disclosure will now be explained with reference to the components or blocks of the system 100 as depicted in FIGS. 1A and 1B and the steps of flow diagram as depicted in FIG. 2. Although process steps, method steps, techniques or the like may be described in a sequential order, such processes, methods, and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

As depicted in system overview, the system 100 comprises two phases a training block to train the multistage learner such as a Hierarchical Model (HM) using a diversified training data set, and an inferencing block to predict or infer the transport mode using 3 axis accelerometer data received for a commuter using the trained multistage learner, for example the trained HM.

Referring to the steps of the method 200, at step 202, during the training phase the one or more hardware processors receive an unlabeled time series data from a diversified population of a plurality of commuters. As depicted in FIG. 1B the unlabeled time series data is data acquired from accelerometer sensor of a mobile device carried by each of the plurality of commuters during a journey where there are no restrictions on the placement/ positioning of the mobile device. During the journey, also referred to as a trip, the commuter or user can commute via a plurality of transport modes such as car, train, subway and even no transport mode such as walk, run, jog etc.

Once raw data is acquired for multiple users, at step 204, the one or more hardware processors 104 determine a plurality of stationary segments (stationary segments) within the journey of each of the plurality of commuters by analyzing the accelerometer data (including its three axes as well understood by persons with ordinary skill in the art). An unsupervised pattern matching technique is used with extrema identification using accelerometer data, interchangeably referred to as accelerometer signal, to identify the journey segments. The steps of determining of the stationary segments in the journey by the stationary segment detection module executed by the one or more hardware processors 104 include:

Step 204a- Sampling the accelerometer data associated with the journey of each of the plurality of commuters into a plurality of samples.

Step 204b- Detecting a plurality of end points and a plurality of start points within the plurality of samples that are associated with a plurality of non-stationary segments (non-stationary segments) of the journey. An end point (stop position) indicating end of a current non-stationary segment is marked when difference between amplitude of the accelerometer data of two consecutive samples is less or equal to a threshold ($\delta$), such that $a_{t+1} - a_t \leq \delta$. Further, a start point (start position) indicating start of a successive non-stationary segment is marked when the difference between the consecutive samples exceeds the threshold ($\delta$) such that $a_{t+1} - a_t > \delta$. Once the acceleration difference exceeds the threshold, the stop duration is reset, and it marks the start of a new journey segment. The $\delta$ value of 0.005 has been used for experiments, and exemplary value of the threshold would be close to zero.

Step 204c- Computing difference between consecutive end point and start point and identifying time duration between each consecutive non-stationary segment as a stop duration. Thereafter, a journey segment associated with a time period of the identified stop duration is considered as stationary segment. Pseudocode 1 describes the automated journey segment identification. FIG. 3A shows the identified start positions and stop positions for different journey segments of a continuous trip/journey using Pseudocode 1, for User 1, SHL data referred in tables 2A, 2B and 2C depicting experimental results. (Start of journey segment is denoted by white circle and end by solid black circle).

## Pseudocode 1: Identification of journey start & stop – after execution of the first level of HM excluding the non-transport mode

*Input*: *Continuous accelerometer signal of transport mode* : $a = \{a1, a2, \ldots, an\}$, *Threshold* : *thresh*, *Stop duration* : *sd*, *Sampling Frequency* : *SF*

*Output*: *Starting & Ending indices of different journeys* : *start & stop*

1: {*Compute the difference between consecutive accelerometer values*}

2: $d \rightarrow []$

3: *for* $i = 2$ *to* $n$ *do*

4: $d_i \rightarrow a_i - a_{i-1}$

5: *end for*

6: {*Initialize start and stop lists*}

7: *start* $\rightarrow [], $ *stop* $\rightarrow [0]$

8: $s \rightarrow 0, q \rightarrow 0, k \rightarrow 0$

9: *for* $i = 1$ *to* $n$ *do*

10: {*Check if the difference is less than threshold*}

11: *if* $d_i < $ *thresh then*

12: $s \rightarrow i$

13: $k \rightarrow k + 1$

14: *else*

15: $q \rightarrow q + 1$

16: {*Check if the duration of the stop is greater than the minimum stop duration*}

17: *if* $q \geq SF$ *then* {*Exemplary value 100 is used in experimentation*}

18: *if* $k \geq sd * SF$ *then*

19: *start*. *append*$(s - k + 1)$

20: *stop*. *append*$(s)$

21: *end if*

22: $k \rightarrow 0$

23: *end if*

24: *end if*

25: *end for*

26: *return start*, *stop*

At step 206, the one or more hardware processors 104 eliminate the time series accelerometer data (time series data) associated with the stationary segments. At step 208, the one or more hardware processors 104 learn a generalizable AECS of the accelerometer data associated with the non-stationary segments of each of the plurality of commuters to generate a training data, also referred to as training domain data. A fixed length latent representation AECS is used to capture significant features of the time series data adapting diversity and commonality inside data as invariant AECS (I-AECS) which is the generalizable AECS. The multistage learner learns the generalizable AECS of the time-series data associated with the non-stationary segments by one of the approaches.

Approach 1: Preparing a generalizable data based on a Maximum Mean Discrepancy (MMD) and the best distance measure to construct domain generalizable latent representation comprising domain invariance to learn I-AECS using a reconstruction loss.

Approach 2:

i. Learning, domain generalizable representation comprising domain invariance, the I-AECS, by minimizing the MMD distance between the AECS of the training domain data and the AECS of a test data and minimizing the reconstruction error as a learning objective, set as a loss function.
ii. Learning the AECS of the training domain data using reconstruction loss in an autoencoder model.
iii. Learning the domain invariant representation of the test domain data using the learned AECS of the training domain data and the test domain data as input.

The domain generalization concept is addressed by uniquely combining various techniques such as dual bonding of diversity and commonality of data distribution (D) and learned representation (LR) techniques. The diverse related domains are considered, for example of the transport domain herein, journeys of diverse users are used. The above is combined with minimum Maximum Mean Discrepancy (MMD) technique provided in literature, a measure gives the difference of data distribution as shown in equation 1, and minimum distance of LR space (dLR) as shown in equation 3.

Definition 1: Domain generalization with LR or AECS (DGLR): In DGLR, U source domains $S_{GD}$ are considered, $S_{GD} = \{S_{GDi}; i = 1...U\}$, where every domain $S_{GD}$ consists only data without any labels. A combination is taken from U with $ArgMin_i(MMD)$ and $ArgMin_i(dLR)$. The objective of domain generalization is to learn a latent representation, embedding the diversity, as well as commonality (I-LR or Invariant-Auto-Encoded-Compact Sequence) to achieve a minimum LR difference between source domain and hidden target domain. This is shown in the experiments section in table 2B and 2C. This enables to achieve robust inference having the closest match with learned trained group on latent representation and target representation. DGLR is established by choosing best combinations of MMD and dLR and described in experimental analysis alter. Suppose $S_{GD}$ and $T_D$ be the generalized source domain data and target domain data respectively, and $LR_{S_{GD}}$ and $LR_{T_D}$ be their learned representations.

$$MMD_k(S_{GD}, T_D) = \left\| \mu_{S_{GD}} - \mu_{T_D} \right\| \qquad (1)$$

where, k, the radial basis function (RBF) kernel between two data samples is defined as:

$$k(x.y) = exp - \gamma \left\| \mu_{S_{GD}} - \mu_{T_D} \right\| \qquad (2)$$

$$dLR - Dist \left( LR_{S_{GD}}, LR_{T_D} \right) \qquad (3)$$

At step 210, the one or more hardware processors 104 train the multistage learner for predicting the plurality of transport modes by applying Hierarchical Clustering (HC) using I-AECS on the training data to generate clusters associated with the plurality of transport modes using a best distance measure selected from among a plurality of distance measures for clustering. The I-AECS enables learning from the diversified user considering the domain generalization (DGLR), wherein learning is on combining those users data which incorporates best diversity and commonality. A method to identify best cluster and recommending the best distance measure is based on HC-AECS as explained in inventors Indian patent application no. 202021015292, filed on April 7, 2020, and not reexplained herein for brevity. The best distance measure is selected based on a modified Hubert statistics ($\tau$) applied across clusters formed by a plurality of distance measures identified for the clustering..

The accelerometer data associated with the non-stationary segments is clustered at (a) a first level into transport associated with vehicle based transport and no-transport mode associated with movement of a commuter without a vehicle usage, (b) at a second level based on road transportation and rail transportation, and (c) at a third level, the cluster associated with the road transportation is further divided into car-bus, the cluster associated with the rail transportation is further divided into train-subway. It can be understood by the person skilled in the art that even though the current clusters focus on rail and road transport, similar approach can be applied to generate hierarchical clusters to group air transport and water transport with further divisions as airplane-helicopter, boat-ship and so on.

**Learning multistage learner, for example the Hierarchical model (HM), for Transport Mode Identification:** The identified journey segments are divided into windows of t samples. Hence, a data of size $X \in R^{N \times t \times d}$ is obtained, where *N* & *d* are the number of instances and dimensions of the data. A hierarchical / multi-stage group based learning described in Pseudocode 2 is performed on the data $X \in R^{N \times t \times d}$ to cluster the different transport types. Firstly, the instances are grouped based on type 1 (Road-type) and type 2 (Rail-type) transportation. Subsequently, the Road-type transportation group is divided further into Car and Bus type and the Rail-type transportation group is broken into Train and Subway / Metro type. FIG. 3B depicts the unsupervised multi-stage learner for transport mode identification. *Hierarchical clustering using auto-encoded latent representation as in inventors* Indian patent application no. 202021015292, filed on April 7, 2020, is used as the clustering mechanism for the multi-stage group based learning due to its robust performance across diverse datasets along with a recommendation of the best distance measure for clustering. It learns a compact representation of the raw time-series using a multilayer Seq-2-seq LSTM autoencoder well known in literature, and then agglomerative hierarchical clustering is performed on the representation. A choice of best distance measure ($d_{best}$) is recommended among Chebyshev, Manhattan, and Mahalanobis distance provided in the literature using an internal clustering measure and the Modified Hubert Statistic as explained in inventors Indian patent application no. 202021015292, filed on April 7, 2020. Here, the groups formed cannot be significantly divided in further sub-groups, i.e., are consistent in nature. The cluster representative (CR) is computed of the groups formed in the multi-stage clustering during learning in the representation space i.e., on the I-LR. The CR of a cluster is computed as the average of the instances present in the cluster. The CR of cluster $C_i$ ($Cen_i$) is defined as:

$$Cen_i = \frac{1}{n} \sum_{c \in C_i} ILR(c) \qquad (4)$$

Where, n is number of elements in the cluster. CRS of the group in first stage clustering are denoted by $C_1$ as {$Cen_1$, $Cen_2$.....}, subsequently CRs in the group at second stage clustering $C_1$ as {$Cen_1{}^1$, $Cen_1{}^2$, ... ... . }, {$Cen_2{}^1$, $Cen_2{}^2$, ... ... . } Respectively.

***Pseudocode*** 2: *Learning Hierarchical model for transport mode identification*

***Input***: *X*: 3 *axis windowed accelerometer data corresponding to*

*different journey segments from diverse users without annotations*

***Output***: *of* $C_1$ , *of* $C_2$ : *Two − stage clustering associated with m*

*different transport types*

1: *def group formation*($D, k$):

2: {*Learn Auto − encoded representation*}

3: $ILR \rightarrow Multi − layer\ Seq2Seq\ auto − encoder\ (D)$

4: {*Form groups and find best distance measure*}

5: $C, d_{best} \rightarrow Hierachical\ clustering\ (\ ILR, k\ )$

6: $return\ ILR, C, d_{best}$

7:

8: **def multistage group based learning($X$):**

9: {*First stage grouping* $-\ n_1\ clusters$}

10: $ILR_1, C_1, d_1\ \rightarrow group\ formation\ (X, n_1)$

11: {*Second stage grouping* $-$ *each of the groups formed*

*in the first stage are divided again into* $n_2 subgroups$}

12: $for\ i\ =\ 1\ to\ n_1\ do:$

13: {*Extract the data for each first stage cluster*}

14: $X_i\ \rightarrow\ X[C_1^{\ i}]\ ]$

15: $ILR_i, C_i, d_i \rightarrow group\ formation\ (\ X_i, n_2)$

16: {*Add formed groups in the list of total clusters C2*}

17: $C_2\ \rightarrow\ C_2\ \cup\ C_2^{\ i}$

18: $end\ for$

19: $return\ C_1, C_2$

**Inferencing:** Once trained, during inferencing, as depicted in FIG. 1B inferencing block, the trained multistage learner predicts the plurality of transport modes associated with input accelerometer data of an unknown commuter received for inferencing using the I-AECS representation of the input accelerometer data. The method disclosed has the capability to infer on journey segments of any user, be it of same or different city as the users, the model is trained with. The inferencing can be directly performed on the journey segments of the users, if provided, or else the starts and stops of the journey segments can be identified using Pseudocode 1. Even during inferencing, the journey segments are further divided into windows of t samples. Subsequently, a compact representation $LR_{test}$ of the windowed data using the autoencoder is performed. Each window is considered individually and the distance of its representation to the CR's of the first stage clusters of $C_1$ formed during the training phase using the recommended distance measure ($d_{best}$) is computed. The window is assigned to the cluster to whose CR its distance is minimum.

$$c = ArgMin_i\ d_{best}(LR_w\ cen_i), 1 \leq i \leq n_1 \qquad (5)$$

where c is the assigned cluster for window w, whose representation, is denoted as $LR_w$. Subsequently, the journey segment is assigned to the cluster to which maximum of its windows are closest. Once the first-stage cluster it is closest to is obtained, say $c_1$, the above steps are repeated for the sub-groups formed by dividing $c_1$ in the second stage, during the learning phase. The distance of the LR is computed of each windows to the CR's of the subgroups of $C_1$ as $\{Cen_{c1}1,\ Cen_{c1}2, ..\ ...\ .\}$. Here also, the journey segment is assigned to the cluster to which maximum of its windows are closest.

**Experimental Analysis**

Dataset Description: The University of Sussex-Huawei Locomotion-Transportation - SHL Dataset collected by University of Sussex, is one of the most extensive publicly available transportation mode detection data. It consists of eight different types of transportation and locomotion classes collected in United Kingdom (UK) considering 3 users over a period of seven months. The classes include transportation types such as Car, Bus, Train, Subway and Bike, and non-transportation activities like Walk, Run and Still. The dataset is recorded using four synchronized mobile phones (mobile devices) placed at hand, chest, hips, and backpack, and consists of sensor modalities such as accelerometer, gyroscope, magnetometer, GPS, network reception etc. The subset of this data which consists of three days of data for each user, made publicly available, is considered for experimental analysis. Unconstrained Sensors Transportation Mode - US-TMD Dataset US-TMD collected by University of Bologna, is another widely used publicly available data for transport mode detection. This data is collected using 13 users, among which ten of them are male, and three are female. The classes of data collected include transportation types such as car, bus and train and non-transport activities like walk and still. Here data is collected using one mobile phone carried by each user, and sensors through which it is collected include accelerometer, magnetometer etc. Table 1 describes the salient features of SHL and TMD datasets.

Table 1:

| Parameter | SHL dataset | TMD dataset |
|---|---|---|
| City | Sussex, UK | Bologna, Italy |
| Users | 3 | 13 |
| Transports | Car, Bus, Train, Subway | Car, Bus, Train |
| Other modes | Walk, Run, Still | Walk, Still |
| Sensor | Accelerometer | Accelerometer |

Data Preprocessing: The method disclosed utilizes only accelerometer sensor (3-axis) inbuilt in smartphone for experimentation. For SHL dataset, the accelerometer data is uniformly sampled at 100 Hz, whereas, for TMD dataset, data is collected at non-uniform sampling rate with a maximum of 20 Hz. Hence for TMD dataset, uniform sampling of the data to 100 Hz using linear extrapolation technique is performed. Subsequently, the continuous data is broken into different journey segments using the technique stated in Pseudocode 1 for the SHL dataset (for TMD data the journey segments are separated inherently in different files). Then, each journey segment is further broken into windows of 1 second (100 sampling points) and Min-max normalization is performed. For both the datasets, it is observed that some of the journey segments are of very short duration ($J_s$), which may not be sufficient for identification of journey mode. Hence, these journey segments are not considered during inferencing, which are less than 1 minute duration ($J_s < 1$ min). This 1 minute duration is considered as stabilization time for journey.

Model Hyperparameters: A Long short-term memory (LSTM) based multi-layer autoencoder, from which a latent representation of length 12 is extracted is used. Mean Squared Error (MSE) loss is used as the optimization function for the network, and the model is run for 1000 epochs. Adam optimizer is used with a learning rate of 0.001 with exponential decay parameters $\beta1$ and $\beta2$ as 0.9 and 0.999 respectively. The training is performed on a system with NVIDIA Tesla V100 GPU with 60 GB RAM and 32 GB GPU memory.

**Results:**

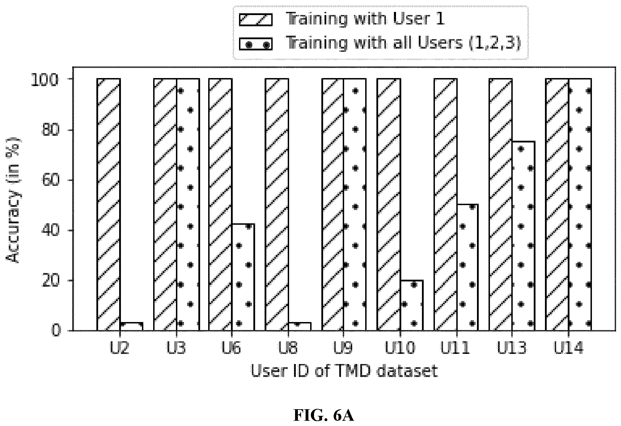

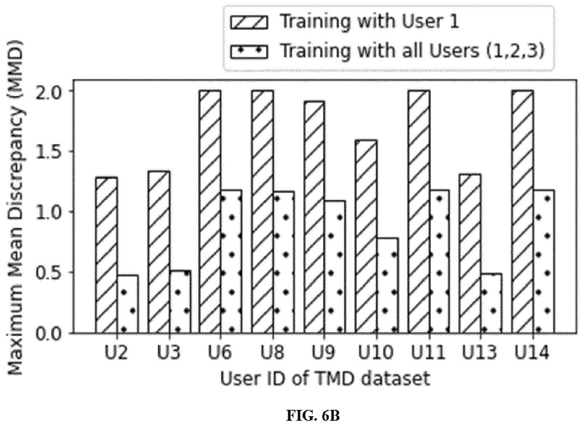

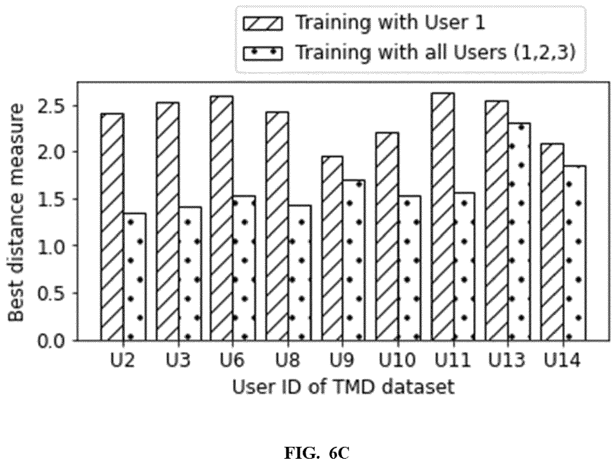

Forming DGLR in accordance with definition provided on domain generalization on learned representation LR, domain generalizable training data $S_{GD}$ is formed using the journey of diverse users of SHL data. FIGS. 6A, 6B and 6C show the MMD distance and the recommended distance measure value dLR (obtained from Hierarchical clustering on LR) between learned representations of all users versus an individual user (say User 1) of $S_{GD}$ with the target set $T_D$. It is observed that both MMD and dLR are minimum for the learned representation trained using all users as compared to User 1. Thus, the $S_{GD}$ is considered as the combination of all users as a domain generalized training data.

Results on SHL Dataset (Same city diverse user view): Firstly, experiment is performed using the SHL dataset where the model (multistage learner) is trained on a user(s) and tested on a different user(s) from same city. Table 2A depicts the results on different combinations of training and test set on which the experiments have been performed and validates expressing the number of matched segments (MS) against total journey segments (TS). Following DGLR, it is observed that on adding a small part (here only one journey segment from each transport type) of target user during learning, the performance improves significantly. The model (multistage learner) trained on the twelve journey segments (one journey segment from each transport type of the 3 users) gives performance of 91%, 100% and 100% on remaining segments of User 1, 2 and 3 respectively.

Table 2A

| E.no | Training set | Test set | Accuracy (MS/TS) |
|---|---|---|---|
| 1 | User 1 | User 2 | 75% (9/12) |
| 2 | Complete User 1 data + Small part of User 2 data (25 %) | User 2 data (excl. 4 train segments) | 100% (12/12) |
| 3 | User 1 | User 3 | 50% (6/12) |
| 4 | Complete User 1 data + Small part of User 2 data (25 %) | User 2 data (excl. 4 train segments) | 100% (12/12) |
| 5 | Complete User 1 data + Small part of User 2 data (25 %) + Small part of User 2 (25 %) | User 2 data (excl. 4 train segments) | 100% (12/12) |
| | | User 3 data (excl. 4 train segments) | 100% (12/12) |
| 6 | Small part of User 1 (25 %) + Small part of User 2 (25 %) + Small part of User 3data (25 %) | **User 1 data (excl. 4 train segments)** | **91% (11/12)** |
| | | **User 2 data (excl. 4 train segments)** | **100% (12/12)** |
| | | **User 3 data (excl. 4 train segments)** | **100% (12/12)** |

Table 2B

| Best Distance measure | | | |
|---|---|---|---|
| | | | |
| | **U1** | **U2** | **U3** |
| **U1** | 0 | 2.52 | 3.1 |
| **All users (4 segs each)** | 1.27 | **0.977** | 1.531 |

Table 2C

| MMD | | | |
|---|---|---|---|
| | | | |
| | **U1** | **U2** | **U3** |
| **U1** | 0 | 0.582 | 1.471 |
| **All users (4 segs each)** | 1.179 | **0.215** | 0.491 |

The bold text of row 6 of Table 2A indicates best performance. As seen from Table 2B, wherein argmin best distance measure equation 3 (0.977) is indicator of best commonality (at least w.r.t. one user - U2). The bold text of row 6 of Table 2A indicates best performance satisfying equation 1 argmin MMD (0.215) given in table 2C.w.r.t User 2 (0.215).Those users' data (combining all users 4 segments each), which incorporates best diversity and commonality represents the generalizable data. This combinations of user data shows a good amount of diversity 1.179. Though U1 shows 1.471 with U3 but does not satisfy equation 1 and 3.

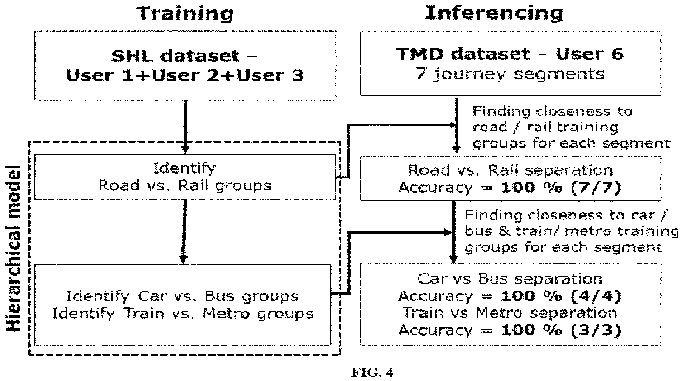

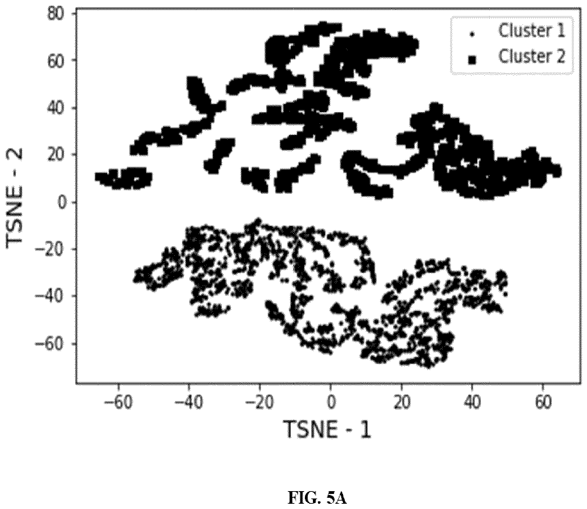

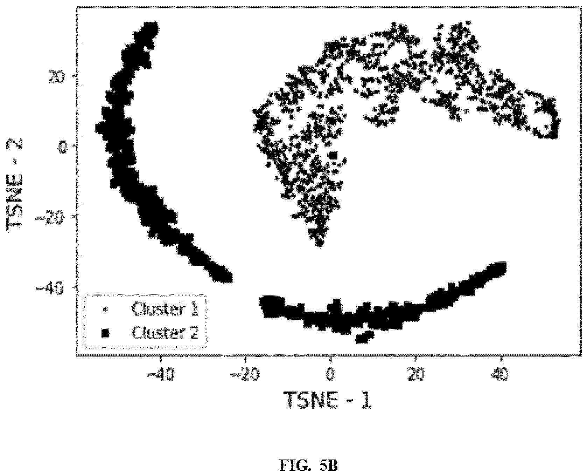

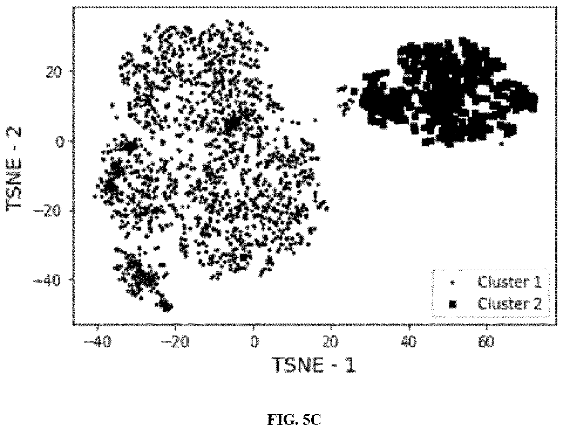

Results on TMD dataset with Model Trained on SHL Dataset (Different city with diverse user): Here following DGLR, experiment is performed on the generalizable domain aspect by training the model (multistage learner) using users of Sussex, UK (SHL dataset) and inferring on the users of Bologna, Italy (TMD dataset). Here $S_{GD}$ is formed using all the three users of SHL dataset (complete user data) considering minimum MMD and minimum difference in LR space i.e., satisfying equation 1 and 3 , and test on each of the users of the TMD dataset individually to achieve user-specific inferencing. Table 4 shows the performance of the model across the users of TMD dataset in terms of accuracy for Road vs. Rail, Car vs. Bus, and Train vs. Subway identification. MS is validated against TS for each of the users, and 100% accuracy across all the stages of transport mode identification is obtained. FIG. 5A, 5B and 5C depict multi-stage grouping for User 3 of SHL dataset during training showing groups formed at first stage (Road vs. Rail) and second stage (Car vs. Bus and Train vs. Subway) (t-SNE plot on the learned representation with the clusters formed) This shows the robustness and the generalization performance across different cities of the proposed method. As an example, FIG. 4 shows a scenario on how the model (multistage learner) trained using SHL dataset is used to infer on U6 of TMD. Table 3 depicts results on SHL Dataset (Same city scenario with different users).

Change in performance is observed if the model is trained with only one user from SHL dataset (say User 1). FIG. 6A, 6B and 6C shows the performance of the model trained on user 1 versus all users (1,2,3) across different users in the TMD dataset. Thus, it can be concluded that the diversity introduced in the training model by learning from a variety from users is an important need for robust performance on the users of different city.

Results on SHL dataset with model trained on TMD dataset (Different city with diverse user): Here, the reverse scenario is performed, where the model (multistage learner) is trained using TMD and infer on the users of SHL dataset. As TMD dataset does not have Subway transportation data, the Subway journey segments of SHL dataset are not considered. For learning, the data from 4 users of TMD dataset (U3,U6, U10, U11) are considered as they cover all the three types of transport modes. Table 4 depicts the performance of the learned model on the three users of SHL dataset. Users 1and 2 a perfect accuracy is observed, while for User 3 only one segment is mismatched in Car vs. Bus.

Table 3

| Results on SHL Dataset (Same city scenario with different users). | | | | |
|---|---|---|---|---|
| User ID | Transport types and total number of segments | Performance (MS/TS) | | |
| | | Road v/s rail | Car v/s bus | Train v/s subway |
| U2 | 2 (Car - 2) | 100 % (2/2) | 100 % (2/2) | - |
| U3 | 5 (Bus - 2, Train - 3) | 100 % (5/5) | 100 % (2/2) | 100 % (3/3) |
| U6 | 7 (Car - 3, Bus - 1, Train - 3) | 100% (7/7) | 100% (4/4) | 100% (3/3) |
| U8 | 2 (Car - 2) | 100 % (2/2) | 100 % (2/2) | - |
| U9 | 1 (Train - 1) | 100 % (1/1) | - | 100 % (1/1) |
| U10 | 9 (Car - 9) | 100% (9/9) | 100% (9/9) | - |
| U11 | 6 (Car - 6) | 100% (6/6) | 100% (6/6) | - |
| U13 | 4 (Car - 4) | 100% (4/4) | 100% (4/4) | - |
| U14 | 1 (Car - 1) | 100 % (1/1) | 100 % (1/1) | - |

Table 4

| Results on TMD Dataset with the proposed model trained on SHL dataset (Different city view) | | | | |
|---|---|---|---|---|
| User ID | Transport types and total number of segments | Performance (MS/TS) | | |
| | | Road v/s rail | Car v/s bus | Train v/s subway |
| 1 | 14 (Car - 8, Bus - 1, Train - 5) | 100% (14/14) | 100% (9/9) | 100 % (5/5)- |
| 2 | 9 (Car - 2, Bus - 2, Train - 5) | 100 % (9/9) | 100 % (4/4) | 100 % (5/5) |
| 3 | 9 (Car - 2, Bus - 5, Train - 2) | 100 % (9/9) | 85.7% (6/7) | 100 % (2/2) |

The method and system disclosed herein provides an unsupervised journey mode identification approach using representation learning, capturing the diversities across various users. The method detects journey segments and correspondingly its mode of transport, without using any label. The mobile phone based accelerometer sensor using all three axes is utilized, without any placement constraint of the phone, instead of using GPS sensor unlike conventional approaches. This enables hazard free collection of journey data, even inside subways or passing through tunnels, where many a times users encounter missing GPS signals. At the same time, the method does not reveal location information, and hence it is sensitive towards preserving privacy of the users. The method disclosed is generalizable across cities and diverse users. This establishes a method of adapting diversities with commonality while learning representation as I-AECS. The method comprises an extrema-based pattern finding to identify the journey segments, followed by multi-stage group based learning using hierarchical clustering on learned representation, I-AECS. Inference is performed in a user-specific manner using best distance measure recommended during learning, where the user can be of same or different city.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

## Claims

1. A processor implemented method (200) for identification of transport mode of commuters, the method comprising:

   receiving (202), via one or more hardware processors, an unlabeled time series data for a diversified population of a plurality of commuters, wherein the unlabeled time series data comprises accelerometer data acquired from an accelerometer of a mobile device carried by each of the plurality of commuters during a journey, and wherein the journey comprises commute via a plurality of transport modes;
   determining (204), via the one or more hardware processors, a plurality of stationary segments within the journey of each of the plurality of commuters by:

   (a) sampling the accelerometer data associated with the journey of each of the plurality of commuters into a plurality of samples (204a);
   (b) detecting a plurality of end points and a plurality of start points within the plurality of samples that are associated with a plurality of non-stationary segments of the journey (204b), wherein

   an end point indicating end of a current non-stationary segment is marked when difference between an amplitude of the accelerometer data of two consecutive samples is less or equal to a threshold ($\delta$), and a start point indicating start of a successive non-stationary segment is marked when the difference between the consecutive samples exceeds the threshold ($\delta$); and

   (c) computing a difference between consecutive end points and start points and identifying time duration between each consecutive non-stationary segments as a stop duration, wherein a journey segment corresponding to a time period of the identified stop duration is considered as a stationary segment (204c);

   eliminating (206), via the one or more hardware processors, the accelerometer data associated with the plurality of stationary segments;
   learning (208), via the one or more hardware processors a generalizable Auto-Encoded Compact Sequence (AECS) of the accelerometer data associated with the plurality of non-stationary segments of each of the plurality of commuters to generate a training data, wherein a fixed length latent representation AECS is used to capture a plurality of significant features of the time series data adapting diversity and commonality inside data as Invariant AECS (I-AECS); and

training (210), via the one or more hardware processors, a multistage learner for predicting the plurality of transport modes by applying Hierarchical Clustering (HC) using I-AECS on the training data to generate clusters corresponding to the plurality of transport modes using a best distance measure selected among a plurality of distance measures for clustering.

2. The method as claimed in claim 1, wherein the trained multistage learner predicts the plurality of transport modes associated with an input accelerometer data of an unknown commuter received for inferencing using the I-AECS representation.

3. The method as claimed in claim 1, wherein the multistage learner learns the generalizable AECS of the time-series data associated with the plurality of non-stationary segments by one of the approaches comprising:

(a) preparing a generalizable data based on a Maximum Mean Discrepancy (MMD) and the best distance measure to construct domain generalizable latent representation comprising domain invariance to learn I-AECS using a reconstruction loss; and
(b) learning, domain generalizable representation comprising domain invariance, the I-AECS, by minimizing the MMD distance between the AECS of the training data and the AECS of a test data and minimizing the reconstruction error as a learning objective, set as a loss function;
learning the AECS of the training data using reconstruction loss in an autoencoder model; and
learning the domain invariant representation of the test domain data using the learned AECS of the training data and the test domain data as input.

4. The method as claimed in claim 1, wherein the accelerometer data associated with the plurality of non-stationary segments is clustered at (a) a first level into transport corresponding to vehicle based transport and no-transport mode associated with movement of a commuter without a vehicle usage, (b) at a second level based on road transportation and rail transportation, and (c) at a third level, the cluster corresponding to the road transportation is further divided into car-bus, the cluster associated with the rail transportation is further divided into train-subway.

5. A system (100) for identification of transport mode of commuters, the system (100) comprising:

a memory (102) storing instructions;
one or more Input/Output (I/O) interfaces (106); and
one or more hardware processors (104) coupled to the memory (102) via the one or more I/O interfaces (106), wherein the one or more hardware processors (104) are configured by the instructions to:

receive an unlabeled time series data for a diversified population of a plurality of commuters, wherein the unlabeled time series data comprises accelerometer data acquired from an accelerometer of a mobile device carried by each of the plurality of commuters during a journey, and wherein the journey comprises commute via a plurality of transport modes;
determine a plurality of stationary segments within the journey of each of the plurality of commuters by:

(a) sampling the accelerometer data associated with the journey of each of the plurality of commuters into a plurality of samples;
(b) detecting a plurality of end points and a plurality of start points within the plurality of samples that are associated with a plurality of non-stationary segments of the journey, wherein

an end point indicating end of a current non-stationary segment is marked when difference between an amplitude of the accelerometer data of two consecutive samples is less or equal to a threshold ($\delta$), and
a start point indicating start of a successive non-stationary segment is marked when the difference between the consecutive samples exceeds the threshold ($\delta$); and

(c) computing a difference between consecutive end points and start points and identifying time duration between each consecutive non-stationary segments as a stop duration, wherein a journey segment corresponding to a time period of the identified stop duration is considered as a stationary segment;

eliminate the accelerometer data associated with the plurality of stationary segments;
learn a generalizable Auto-Encoded Compact Sequence (AECS) of the accelerometer data associated with the plurality of non-stationary segments of each of the plurality of commuters to generate a training data, wherein a fixed length latent representation AECS is used to capture a plurality of significant features of the time series data adapting diversity and commonality inside data as Invariant AECS (I-AECS); and train a multistage learner for predicting the plurality of transport modes by applying Hierarchical Clustering (HC) using I-AECS on the training data to generate clusters corresponding to the plurality of transport modes using a best distance measure selected among a plurality of distance measures for clustering.

6. The system as claimed in claim 5, wherein the trained multistage learner predicts the plurality of transport modes associated with an input accelerometer data of an unknown commuter received for inferencing using the I-AECS representation.

7. The system as claimed in claim 5, wherein the multistage learner learns the generalizable AECS of the time-series data associated with the plurality of non-stationary segments by one of the approaches comprising:

   (a) preparing a generalizable data based on a Maximum Mean Discrepancy (MMD) and the best distance measure to construct domain generalizable latent representation comprising domain invariance to learn I-AECS using a reconstruction loss; and
   (b) learning, domain generalizable representation comprising domain invariance, the I-AECS, by minimizing the MMD distance between the AECS of the training data and the AECS of a test data and minimizing the reconstruction error as a learning objective, set as a loss function;
   learning the AECS of the training data using reconstruction loss in an autoencoder model; and
   learning the domain invariant representation of the test domain data using the learned AECS of the training data and the test domain data as input.

8. The system as claimed in claim 5, wherein the accelerometer data associated with the plurality of non-stationary segments is clustered at (a) a first level into transport corresponding to vehicle based transport and no-transport mode associated with movement of a commuter without a vehicle usage, (b) at a second level based on road transportation and rail transportation, and (c) at a third level, the cluster corresponding to the road transportation is further divided into car-bus, the cluster associated with the rail transportation is further divided into train-subway.

9. One or more non-transitory machine-readable information storage mediums comprising one or more instructions which when executed by one or more hardware processors cause:

   receiving an unlabeled time series data for a diversified population of a plurality of commuters, wherein the unlabeled time series data comprises accelerometer data acquired from an accelerometer of a mobile device carried by each of the plurality of commuters during a journey, and wherein the journey comprises commute via a plurality of transport modes;
   determining a plurality of stationary segments within the journey of each of the plurality of commuters by:

   (a) sampling the accelerometer data associated with the journey of each of the plurality of commuters into a plurality of samples ;
   (b) detecting a plurality of end points and a plurality of start points within the plurality of samples that are associated with a plurality of non-stationary segments of the journey , wherein

      an end point indicating end of a current non-stationary segment is marked when difference between an amplitude of the accelerometer data of two consecutive samples is less or equal to a threshold ($\delta$), and a start point indicating start of a successive non-stationary segment is marked when the difference between the consecutive samples exceeds the threshold ($\delta$); and

   (c) computing a difference between consecutive end points and start points and identifying time duration between each consecutive non-stationary segments as a stop duration, wherein a journey segment corresponding to a time period of the identified stop duration is considered as a stationary segment;

   eliminating the accelerometer data associated with the plurality of stationary segments;
   learning a generalizable Auto-Encoded Compact Sequence (AECS) of the accelerometer data associated with the plurality of non-stationary segments of each of the plurality of commuters to generate a training data, wherein a fixed length latent representation AECS is used to capture a plurality of significant features of the time series data adapting diversity and commonality inside data as Invariant AECS (I-AECS); and

training a multistage learner for predicting the plurality of transport modes by applying Hierarchical Clustering (HC) using I-AECS on the training data to generate clusters corresponding to the plurality of transport modes using a best distance measure selected among a plurality of distance measures for clustering.

10. The one or more non-transitory machine-readable information storage mediums as claimed in claim 9, wherein the trained multistage learner predicts the plurality of transport modes associated with an input accelerometer data of an unknown commuter received for inferencing using the I-AECS representation.

11. The one or more non-transitory machine-readable information storage mediums as claimed in claim 9, wherein the one or more instructions which when executed by the one or more hardware processors cause the multistage learner to learn the generalizable AECS of the time-series data associated with the plurality of non-stationary segments by one of the approaches comprising::

(a) preparing a generalizable data based on a Maximum Mean Discrepancy (MMD) and the best distance measure to construct domain generalizable latent representation comprising domain invariance to learn I-AECS using a reconstruction loss; and
(b) learning, domain generalizable representation comprising domain invariance, the I-AECS, by minimizing the MMD distance between the AECS of the training data and the AECS of a test data and minimizing the reconstruction error as a learning objective, set as a loss function;
learning the AECS of the training data using reconstruction loss in an autoencoder model; and
learning the domain invariant representation of the test domain data using the learned AECS of the training data and the test domain data as input.

12. The one or more non-transitory machine-readable information storage mediums as claimed in claim 9, wherein the accelerometer data associated with the plurality of non-stationary segments is clustered at (a) a first level into transport corresponding to vehicle based transport and no-transport mode associated with movement of a commuter without a vehicle usage, (b) at a second level based on road transportation and rail transportation, and (c) at a third level, the cluster corresponding to the road transportation is further divided into car-bus, the cluster associated with the rail transportation is further divided into train-subway.

**Patentansprüche**

1. Prozessorimplementiertes Verfahren (200) zur Identifizierung eines Transportmodus von Pendlern, wobei das Verfahren Folgendes umfasst:

Empfangen (202), über einen oder mehrere Hardwareprozessoren, von unmarkierten Zeitreihendaten für eine diversifizierte Population einer Mehrzahl von Pendlern, wobei die unmarkierten Zeitreihendaten Beschleunigungsmesserdaten umfassen, die von einem Beschleunigungsmesser einer mobilen Vorrichtung erfasst werden, die von jedem der Mehrzahl von Pendlern während einer Fahrt mitgeführt wird, und wobei die Fahrt Pendeln über eine Mehrzahl von Transportmodi umfasst;
Bestimmen (204), über den einen oder die mehreren Hardwareprozessoren, einer Mehrzahl von stationären Segmenten innerhalb der Fahrt jedes der Mehrzahl von Pendlern durch:

(a) Abtasten der Beschleunigungsmesserdaten, die der Fahrt jedes der Mehrzahl von Pendlern zugeordnet sind, in eine Mehrzahl von Abtastungen (204a);
(b) Erfassen einer Mehrzahl von Endpunkten und einer Mehrzahl von Startpunkten innerhalb der Mehrzahl von Abtastungen, die einer Mehrzahl von nicht stationären Segmenten der Fahrt (204b) zugeordnet sind, wobei

ein Endpunkt, der ein Ende eines aktuellen nicht stationären Segments angibt, markiert wird, wenn eine Differenz zwischen einer Amplitude der Beschleunigungsmesserdaten von zwei aufeinanderfolgenden Abtastungen kleiner oder gleich einem Schwellenwert ($\delta$) ist, und
ein Startpunkt, der einen Start eines nachfolgenden nicht stationären Segments angibt, markiert wird, wenn die Differenz zwischen den aufeinanderfolgenden Abtastungen den Schwellenwert ($\delta$) überschreitet; und

(c) Berechnen einer Differenz zwischen aufeinanderfolgenden Endpunkten und Startpunkten und Identifizieren einer Zeitdauer zwischen jedem aufeinanderfolgenden nicht stationären Segment als eine Stoppdauer, wobei ein Fahrsegment, das einer Zeitperiode der identifizierten Stoppdauer entspricht, als ein stationäres Segment (204c) betrachtet wird;

Eliminieren (206), über den einen oder die mehreren Hardwareprozessoren, der Beschleunigungsmesserdaten, die der Mehrzahl von stationären Segmenten zugeordnet sind;

Lernen (208), über den einen oder die mehreren Hardwareprozessoren, einer verallgemeinbaren autocodierten kompakten Sequenz (AECS) der Beschleunigungsmesserdaten, die der Mehrzahl von nicht stationären Segmenten jedes der Mehrzahl von Pendlern zugeordnet sind, um Trainingsdaten zu erzeugen, wobei eine latente Darstellung mit fester Länge (AECS) verwendet wird, um eine Mehrzahl von signifikanten Merkmalen der Zeitreihendaten zu erfassen, die Diversität und Gemeinsamkeit innerhalb von Daten als invariante AECS (I-AECS) anpassen; und

Trainieren (210), über den einen oder die mehreren Hardwareprozessoren, eines mehrstufigen Lerners zum Vorhersagen der Mehrzahl von Transportmodi durch Anwenden von hierarchischem Clustering (HC) unter Verwendung von I-AECS auf die Trainingsdaten, um Cluster zu erzeugen, die der Mehrzahl von Transportmodi entsprechen, unter Verwendung eines besten Abstandsmaßes, das aus einer Mehrzahl von Abstandsmaßen zum Clustern ausgewählt ist.

2. Verfahren nach Anspruch 1, wobei der trainierte mehrstufige Lerner die Mehrzahl von Transportmodi vorhersagt, die Eingabebeschleunigungsmesserdaten eines unbekannten Pendlers zugeordnet sind, die zum Ableiten unter Verwendung der I-AECS-Darstellung empfangen werden.

3. Verfahren nach Anspruch 1, wobei der mehrstufige Lerner die verallgemeinbare AECS der Zeitreihendaten, die der Mehrzahl von nicht stationären Segmenten zugeordnet sind, durch einen der Ansätze lernt, die Folgendes umfassen:

(a) Vorbereiten von verallgemeinbaren Daten basierend auf einer maximalen mittleren Diskrepanz (MMD) und dem besten Abstandsmaß, um eine domänenverallgemeinbare latente Darstellung zu konstruieren, die Domäneninvarianz umfasst, um I-AECS unter Verwendung eines Rekonstruktionsverlustes zu lernen; und

(b) Lernen der domänenverallgemeinbaren Darstellung, die Domäneninvarianz umfasst, der I-AECS, durch Minimieren des NMM-Abstands zwischen der AECS der Trainingsdaten und der AECS von Testdaten und Minimieren des Rekonstruktionsfehlers als ein Lernziel, das als eine Verlustfunktion festgelegt ist;

Lernen der AECS der Trainingsdaten unter Verwendung von Rekonstruktionsverlust in einem Autoencodermodell; und

Lernen der domäneninvarianten Darstellung der Testdomänendaten unter Verwendung der gelernten AECS der Trainingsdaten und der Testdomänendaten als Eingabe.

4. Verfahren nach Anspruch 1, wobei die Beschleunigungsmesserdaten, die der Mehrzahl von nicht stationären Segmenten zugeordnet sind, auf (a) einer ersten Ebene in einen Transport, der einem fahrzeugbasierten Transport- und Nicht-Transportmodus entspricht, der der Bewegung eines Pendlers ohne eine Fahrzeugnutzung zugeordnet ist, (b) auf einer zweiten Ebene, die auf Straßentransport und Schienentransport basiert, und (c) auf einer dritten Ebene geclustert werden, wobei der Cluster, der dem Straßentransport entspricht, weiter in einen Autobus unterteilt wird, wobei der Cluster, der dem Schienentransport zugeordnet ist, weiter in eine Zug-U-Bahn unterteilt wird.

5. System (100) zur Identifizierung eines Transportmodus von Pendlern, wobei das System (100) Folgendes umfasst:

einen Speicher (102), der Anweisungen speichert;

eine oder mehrere Eingabe/Ausgabe(E/A)-Schnittstellen (106); und

einen oder mehrere Hardwareprozessoren (104), die über die eine oder die mehreren E/A-Schnittstellen (106) mit dem Speicher (102) gekoppelt sind, wobei der eine oder die mehreren Hardwareprozessoren (104) durch die Anweisungen konfiguriert sind zum:

Empfangen von unmarkierten Zeitreihendaten für eine diversifizierte Population einer Mehrzahl von Pendlern, wobei die unmarkierten Zeitreihendaten Beschleunigungsmesserdaten umfassen, die von einem Beschleunigungsmesser einer mobilen Vorrichtung erfasst werden, die von jedem der Mehrzahl von Pendlern während einer Fahrt mitgeführt wird, und wobei die Fahrt Pendeln über eine Mehrzahl von Transportmodi umfasst;

Bestimmen einer Mehrzahl von stationären Segmenten innerhalb der Fahrt jedes der Mehrzahl von Pendlern durch:

(a) Abtasten der Beschleunigungsmesserdaten, die der Fahrt jedes der Mehrzahl von Pendlern zugeordnet sind, in eine Mehrzahl von Abtastungen;

(b) Erfassen einer Mehrzahl von Endpunkten und einer Mehrzahl von Startpunkten innerhalb der Mehrzahl von Abtastungen, die einer Mehrzahl von nicht stationären Segmenten der Fahrt zugeordnet sind, wobei

ein Endpunkt, der ein Ende eines aktuellen nicht stationären Segments angibt, markiert wird, wenn eine Differenz zwischen einer Amplitude der Beschleunigungsmesserdaten von zwei aufeinanderfolgenden Abtastungen kleiner oder gleich einem Schwellenwert ($\delta$) ist, und

ein Startpunkt, der einen Start eines nachfolgenden nicht stationären Segments angibt, markiert wird, wenn die Differenz zwischen den aufeinanderfolgenden Abtastungen den Schwellenwert ($\delta$) überschreitet; und

(c) Berechnen einer Differenz zwischen aufeinanderfolgenden Endpunkten und Startpunkten und Identifizieren einer Zeitdauer zwischen jedem aufeinanderfolgenden nicht stationären Segment als eine Stoppdauer, wobei ein Fahrsegment, das einer Zeitperiode der identifizierten Stoppdauer entspricht, als ein stationäres Segment betrachtet wird;

Eliminieren der Beschleunigungsmesserdaten, die der Mehrzahl von stationären Segmenten zugeordnet sind;

Lernen einer verallgemeinbaren autocodierten kompakten Sequenz (AECS) der Beschleunigungsmesserdaten, die der Mehrzahl von nicht stationären Segmenten jedes der Mehrzahl von Pendlern zugeordnet sind, um Trainingsdaten zu erzeugen, wobei eine latente Darstellung mit fester Länge (AECS) verwendet wird, um eine Mehrzahl von signifikanten Merkmalen der Zeitreihendaten zu erfassen, die Diversität und Gemeinsamkeit innerhalb von Daten als invariante AECS (I-AECS) anpassen; und

Trainieren eines mehrstufigen Lerners zum Vorhersagen der Mehrzahl von Transportmodi durch Anwenden von hierarchischem Clustering (HC) unter Verwendung von I-AECS auf die Trainingsdaten, um Cluster zu erzeugen, die der Mehrzahl von Transportmodi entsprechen, unter Verwendung eines besten Abstandsmaßes, das aus einer Mehrzahl von Abstandsmaßen zum Clustern ausgewählt ist.

6. System nach Anspruch 5, wobei der trainierte mehrstufige Lerner die Mehrzahl von Transportmodi vorhersagt, die Eingabebeschleunigungsmesserdaten eines unbekannten Pendlers zugeordnet sind, die zum Ableiten unter Verwendung der I-AECS-Darstellung empfangen werden.

7. System nach Anspruch 5, wobei der mehrstufige Lerner die verallgemeinbare AECS der Zeitreihendaten, die der Mehrzahl von nicht stationären Segmenten zugeordnet sind, durch einen der Ansätze lernt, die Folgendes umfassen:

(a) Vorbereiten von verallgemeinbaren Daten basierend auf einer maximalen mittleren Diskrepanz (MMD) und dem besten Abstandsmaß, um eine domänenverallgemeinbare latente Darstellung zu konstruieren, die Domäneninvarianz umfasst, um I-AECS unter Verwendung eines Rekonstruktionsverlustes zu lernen; und

(b) Lernen der domänenverallgemeinbaren Darstellung, die Domäneninvarianz umfasst, der I-AECS, durch Minimieren des NMM-Abstands zwischen der AECS der Trainingsdaten und der AECS von Testdaten und Minimieren des Rekonstruktionsfehlers als ein Lernziel, das als eine Verlustfunktion festgelegt ist;

Lernen der AECS der Trainingsdaten unter Verwendung von Rekonstruktionsverlust in einem Autoencodermodell; und

Lernen der domäneninvarianten Darstellung der Testdomänendaten unter Verwendung der gelernten AECS der Trainingsdaten und der Testdomänendaten als Eingabe.

8. System nach Anspruch 5, wobei die Beschleunigungsmesserdaten, die der Mehrzahl von nicht stationären Segmenten zugeordnet sind, auf (a) einer ersten Ebene in einen Transport, der einem fahrzeugbasierten Transport- und Nicht-Transportmodus entspricht, der der Bewegung eines Pendlers ohne eine Fahrzeugnutzung zugeordnet ist, (b) auf einer zweiten Ebene, die auf Straßentransport und Schienentransport basiert, und (c) auf einer dritten Ebene geclustert werden, wobei der Cluster, der dem Straßentransport entspricht, weiter in einen Autobus unterteilt wird, wobei der Cluster, der dem Schienentransport zugeordnet ist, weiter in eine Zug-U-Bahn unterteilt wird.

9. Ein oder mehrere nichtflüchtige maschinenlesbare Informationsspeichermedien, die eine oder mehrere Anweisungen umfassen, die, wenn sie von einem oder mehreren Hardwareprozessoren ausgeführt werden, Folgendes bewirken:

Empfangen von unmarkierten Zeitreihendaten für eine diversifizierte Population einer Mehrzahl von Pendlern, wobei die unmarkierten Zeitreihendaten Beschleunigungsmesserdaten umfassen, die von einem Beschleunigungsmesser einer mobilen Vorrichtung erfasst werden, die von jedem der Mehrzahl von Pendlern während einer Fahrt mitgeführt wird, und wobei die Fahrt Pendeln über eine Mehrzahl von Transportmodi umfasst; Bestimmen einer Mehrzahl von stationären Segmenten innerhalb der Fahrt jedes der Mehrzahl von Pendlern durch:

(a) Abtasten der Beschleunigungsmesserdaten, die der Fahrt jedes der Mehrzahl von Pendlern zugeordnet sind, in eine Mehrzahl von Abtastungen;

(b) Erfassen einer Mehrzahl von Endpunkten und einer Mehrzahl von Startpunkten innerhalb der Mehrzahl von Abtastungen, die einer Mehrzahl von nicht stationären Segmenten der Fahrt zugeordnet sind, wobei

ein Endpunkt, der ein Ende eines aktuellen nicht stationären Segments angibt, markiert wird, wenn eine Differenz zwischen einer Amplitude der Beschleunigungsmesserdaten von zwei aufeinanderfolgenden Abtastungen kleiner oder gleich einem Schwellenwert ($\delta$) ist, und

ein Startpunkt, der einen Start eines nachfolgenden nicht stationären Segments angibt, markiert wird, wenn die Differenz zwischen den aufeinanderfolgenden Abtastungen den Schwellenwert ($\delta$) überschreitet; und

(c) Berechnen einer Differenz zwischen aufeinanderfolgenden Endpunkten und Startpunkten und Identifizieren einer Zeitdauer zwischen jedem aufeinanderfolgenden nicht stationären Segment als eine Stoppdauer, wobei ein Fahrsegment, das einer Zeitperiode der identifizierten Stoppdauer entspricht, als ein stationäres Segment betrachtet wird;

Eliminieren der Beschleunigungsmesserdaten, die der Mehrzahl von stationären Segmenten zugeordnet sind; Lernen einer verallgemeinbaren autocodierten kompakten Sequenz (AECS) der Beschleunigungsmesserdaten, die der Mehrzahl von nicht stationären Segmenten jedes der Mehrzahl von Pendlern zugeordnet sind, um Trainingsdaten zu erzeugen, wobei eine latente Darstellung mit fester Länge (AECS) verwendet wird, um eine Mehrzahl von signifikanten Merkmalen der Zeitreihendaten zu erfassen, die Diversität und Gemeinsamkeit innerhalb von Daten als invariante AECS (I-AECS) anpassen; und Trainieren eines mehrstufigen Lerners zum Vorhersagen der Mehrzahl von Transportmodi durch Anwenden von hierarchischem Clustering (HC) unter Verwendung von I-AECS auf die Trainingsdaten, um Cluster zu erzeugen, die der Mehrzahl von Transportmodi entsprechen, unter Verwendung eines besten Abstandsmaßes, das aus einer Mehrzahl von Abstandsmaßen zum Clustern ausgewählt ist.

**10.** Ein oder mehrere nichtflüchtige maschinenlesbare Informationsspeichermedien nach Anspruch 9, wobei der trainierte mehrstufige Lerner die Mehrzahl von Transportmodi vorhersagt, die Eingabebeschleunigungsmesserdaten eines unbekannten Pendlers zugeordnet sind, die zum Ableiten unter Verwendung der I-AECS-Darstellung empfangen werden.

**11.** Ein oder mehrere nichtflüchtige maschinenlesbare Informationsspeichermedien nach Anspruch 9, wobei die eine oder die mehreren Anweisungen, die, wenn sie von dem einen oder den mehreren Hardwareprozessoren ausgeführt werden, den mehrstufigen Lerner dazu veranlassen, die verallgemeinbare AECS der Zeitreihendaten, die der Mehrzahl von nicht stationären Segmenten zugeordnet sind, durch einen der Ansätze zu lernen, die Folgendes umfassen:

(a) Vorbereiten von verallgemeinbaren Daten basierend auf einer maximalen mittleren Diskrepanz (MMD) und dem besten Abstandsmaß, um eine domänenverallgemeinbare latente Darstellung zu konstruieren, die Domäneninvarianz umfasst, um I-AECS unter Verwendung eines Rekonstruktionsverlustes zu lernen; und

(b) Lernen der domänenverallgemeinbaren Darstellung, die Domäneninvarianz umfasst, der I-AECS, durch Minimieren des NMM-Abstands zwischen der AECS der Trainingsdaten und der AECS von Testdaten und Minimieren des Rekonstruktionsfehlers als ein Lernziel, das als eine Verlustfunktion festgelegt ist; Lernen der AECS der Trainingsdaten unter Verwendung von Rekonstruktionsverlust in einem Autoencodermodell; und Lernen der domäneninvarianten Darstellung der Testdomänendaten unter Verwendung der gelernten AECS der Trainingsdaten und der Testdomänendaten als Eingabe.

**12.** Ein oder mehrere nichtflüchtige maschinenlesbare Informationsspeichermedien nach Anspruch 9, wobei die Beschleunigungsmesserdaten, die der Mehrzahl von nicht stationären Segmenten zugeordnet sind, auf (a) einer ersten Ebene in einen Transport, der einem fahrzeugbasierten Transport- und Nicht-Transportmodus entspricht, der der Bewegung eines Pendlers ohne eine Fahrzeugnutzung zugeordnet ist, (b) auf einer zweiten Ebene, die auf Straßentransport und Schienentransport basiert, und (c) auf einer dritten Ebene geclustert werden, wobei der Cluster, der dem Straßentransport entspricht, weiter in einen Autobus unterteilt wird, wobei der Cluster, der dem Schienentransport zugeordnet ist, weiter in eine Zug-U-Bahn unterteilt wird.

**Revendications**

1. Procédé mis en oeuvre par processeur (200) d'identification de mode de transport de navetteurs, le procédé comprenant le fait de :

   recevoir (202), par l'intermédiaire d'un ou plusieurs processeurs matériels, des données de série temporelle non étiquetées pour une population diversifiée d'une pluralité de navetteurs, dans lesquelles les données de série temporelle non étiquetées comprennent des données d'accéléromètre acquises à partir d'un accéléromètre d'un dispositif mobile qui est porté par chaque navetteur de la pluralité de navetteurs au cours d'un trajet, et dans lequel le trajet comprend des déplacements par l'intermédiaire d'une pluralité de modes de transport ;
   déterminer (204), par l'intermédiaire dudit un ou desdits plusieurs processeurs matériels, une pluralité de segments stationnaires au cours du trajet de chaque navetteur de la pluralité de navetteurs, en :

      (a) échantillonnant les données d'accéléromètre associées au trajet de chaque navetteur de la pluralité de navetteurs en une pluralité d'échantillons (204a) ;
      (b) détectant une pluralité de points de fin et une pluralité de points de début dans la pluralité d'échantillons qui sont associés à une pluralité de segments non stationnaires du trajet (204b), dans lequel

         un point de fin indiquant la fin d'un segment non stationnaire en cours est marqué lorsque la différence entre une amplitude des données d'accéléromètre de deux échantillons consécutifs est inférieure ou égale à un seuil ($\delta$) ; et
         un point de début indiquant le début d'un segment non stationnaire successif est marqué lorsque la différence entre les échantillons consécutifs est supérieure au seuil ($\delta$) ; et

      (c) calculant une différence entre des points de fin et points de début consécutifs et en identifiant une durée temporelle entre chaque segment non stationnaire consécutif en tant qu'une durée d'arrêt, dans lequel un segment de trajet correspondant à une période de temps de la durée d'arrêt identifiée est considéré comme un segment stationnaire (204c) ;

   éliminer (206), par l'intermédiaire dudit un ou desdits plusieurs processeurs matériels, les données d'accéléromètre associées à la pluralité de segments stationnaires ;
   apprendre (208), par l'intermédiaire dudit un ou desdits plusieurs processeurs matériels, une séquence compacte auto-codée (AECS) généralisable des données d'accéléromètre associées à la pluralité de segments non stationnaires de chaque navetteur de la pluralité de navetteurs, en vue de générer des données d'entraînement, dans laquelle une séquence AECS de représentation latente de longueur fixe est utilisée pour capturer une pluralité de caractéristiques significatives des données de série temporelle en adaptant une diversité et une similitude à l'intérieur de données en tant qu'une séquence AECS invariante (I-AECS) ; et
   entraîner (210), par l'intermédiaire dudit un ou desdits plusieurs processeurs matériels, un apprenant à plusieurs étages afin de prédire la pluralité de modes de transport en appliquant un regroupement hiérarchique (HC) à l'aide de la séquence I-AECS sur les données d'entraînement, en vue de générer des groupes correspondant à la pluralité de modes de transport à l'aide d'une meilleure mesure de distance sélectionnée parmi une pluralité de mesures de distance pour le regroupement.

2. Procédé selon la revendication 1, dans lequel l'apprenant à plusieurs étages entraîné prédit la pluralité de modes de transport associés à des données d'accéléromètre d'entrée d'un navetteur inconnu reçues en vue d'une inférence à l'aide de la représentation de séquence I-AECS.

3. Procédé selon la revendication 1, dans lequel l'apprenant à plusieurs étages apprend la séquence AECS généralisable des données de série temporelle associées à la pluralité de segments non stationnaires par le biais de l'une des approches comprenant le fait de :

(a) préparer des données généralisables sur la base d'une divergence moyenne maximale (MMD) et de la meilleure mesure de distance pour construire une représentation latente généralisable de domaine comprenant une invariance de domaine afin d'apprendre la séquence I-AECS à l'aide d'une perte de reconstruction ; et

(b) apprendre une représentation généralisable de domaine comprenant une invariance de domaine, et la séquence I-AECS, en minimisant la distance de divergence MMD entre la séquence AECS des données d'entraînement et la séquence AECS de données de test, et en minimisant l'erreur de reconstruction en tant qu'un objectif d'apprentissage, défini en tant qu'une fonction de perte ;

apprendre la séquence AECS des données d'entraînement à l'aide de la perte de reconstruction dans un modèle d'autocodeur ; et

apprendre la représentation invariante de domaine des données de domaine de test à l'aide de la séquence AECS apprise des données d'entraînement et des données de domaine de test en tant qu'entrée.

4. Procédé selon la revendication 1, dans lequel les données d'accéléromètre associées à la pluralité de segments non stationnaires sont regroupées (a) à un premier niveau en un transport correspondant à un transport à base de véhicule et à un mode sans transport associé au déplacement d'un navetteur sans utilisation de véhicule, (b) à un deuxième niveau basé sur un transport routier et un transport ferroviaire, et (c) à un troisième niveau, le groupe correspondant au transport routier est en outre divisé en « voiture-bus », le groupe associé au transport ferroviaire est en outre divisé en « train-métro ».

5. Système (100) d'identification de mode de transport de navetteurs, le système (100) comprenant :

une mémoire (102) stockant des instructions ;

une ou plusieurs interfaces d'entrée/sortie (I/O) (106) ; et

un ou plusieurs processeurs matériels (104) couplés à la mémoire (102) par l'intermédiaire de ladite une ou desdites plusieurs interfaces I/O (106), dans lesquels ledit un ou lesdits plusieurs processeurs matériels (104) sont configurés, par les instructions, de manière à :

recevoir des données de série temporelle non étiquetées pour une population diversifiée d'une pluralité de navetteurs, dans lesquelles les données de série temporelle non étiquetées comprennent des données d'accéléromètre acquises à partir d'un accéléromètre d'un dispositif mobile qui est porté par chaque navetteur de la pluralité de navetteurs au cours d'un trajet, et dans lequel le trajet comprend des déplacements par l'intermédiaire d'une pluralité de modes de transport ;

déterminer une pluralité de segments stationnaires au cours du trajet de chaque navetteur de la pluralité de navetteurs, en :

(a) échantillonnant les données d'accéléromètre associées au trajet de chaque navetteur de la pluralité de navetteurs en une pluralité d'échantillons ;

(b) détectant une pluralité de points de fin et une pluralité de points de début dans la pluralité d'échantillons qui sont associés à une pluralité de segments non stationnaires du trajet, dans lequel

un point de fin indiquant la fin d'un segment non stationnaire en cours est marqué lorsque la différence entre une amplitude des données d'accéléromètre de deux échantillons consécutifs est inférieure ou égale à un seuil ($\delta$) ; et

un point de début indiquant le début d'un segment non stationnaire successif est marqué lorsque la différence entre les échantillons consécutifs est supérieure au seuil ($\delta$) ; et

(c) calculant une différence entre des points de fin et points de début consécutifs et en identifiant une durée temporelle entre chaque segment non stationnaire consécutif en tant qu'une durée d'arrêt, dans lequel un segment de trajet correspondant à une période de temps de la durée d'arrêt identifiée est considéré comme un segment stationnaire ;

éliminer les données d'accéléromètre associées à la pluralité de segments stationnaires ;

apprendre une séquence compacte auto-codée (AECS) généralisable des données d'accéléromètre associées à la pluralité de segments non stationnaires de chaque navetteur de la pluralité de navetteurs, en vue de générer des données d'entraînement, dans laquelle une séquence AECS de représentation latente de longueur fixe est utilisée pour capturer une pluralité de caractéristiques significatives des données de série temporelle en adaptant une diversité et une similitude à l'intérieur de données en tant qu'une séquence AECS invariante (I-AECS) ; et

entraîner un apprenant à plusieurs étages afin de prédire la pluralité de modes de transport en appliquant un regroupement hiérarchique (HC) à l'aide de la séquence I-AECS sur les données d'entraînement, en vue de générer des groupes correspondant à la pluralité de modes de transport à l'aide d'une meilleure mesure de distance sélectionnée parmi une pluralité de mesures de distance pour le regroupement.

6. Système selon la revendication 5, dans lequel l'apprenant à plusieurs étages entraîné prédit la pluralité de modes de transport associés à des données d'accéléromètre d'entrée d'un navetteur inconnu reçues en vue d'une inférence à l'aide de la représentation de séquence I-AECS.

7. Système selon la revendication 5, dans lequel l'apprenant à plusieurs étages apprend la séquence AECS généralisable des données de série temporelle associées à la pluralité de segments non stationnaires par le biais de l'une des approches comprenant le fait de :

(a) préparer des données généralisables sur la base d'une divergence moyenne maximale (MMD) et de la meilleure mesure de distance pour construire une représentation latente généralisable de domaine comprenant une invariance de domaine afin d'apprendre la séquence I-AECS à l'aide d'une perte de reconstruction ; et
(b) apprendre une représentation généralisable de domaine comprenant une invariance de domaine, et la séquence I-AECS, en minimisant la distance de divergence MMD entre la séquence AECS des données d'entraînement et la séquence AECS de données de test, et en minimisant l'erreur de reconstruction en tant qu'un objectif d'apprentissage, défini en tant qu'une fonction de perte ;
apprendre la séquence AECS des données d'entraînement à l'aide de la perte de reconstruction dans un modèle d'autocodeur ; et
apprendre la représentation invariante de domaine des données de domaine de test à l'aide de la séquence AECS apprise des données d'entraînement et des données de domaine de test en tant qu'entrée.

8. Système selon la revendication 5, dans lequel les données d'accéléromètre associées à la pluralité de segments non stationnaires sont regroupées (a) à un premier niveau en un transport correspondant à un transport à base de véhicule et à un mode sans transport associé au déplacement d'un navetteur sans utilisation de véhicule, (b) à un deuxième niveau basé sur un transport routier et un transport ferroviaire, et (c) à un troisième niveau, le groupe correspondant au transport routier est en outre divisé en « voiture-bus », le groupe associé au transport ferroviaire est en outre divisé en « train-métro ».

9. Un ou plusieurs supports non transitoires de stockage d'informations lisibles par machine comprenant une ou plusieurs instructions qui, lorsqu'elles sont exécutées par un ou plusieurs processeurs matériels, occasionnent le fait de :

recevoir des données de série temporelle non étiquetées pour une population diversifiée d'une pluralité de navetteurs, dans lesquelles les données de série temporelle non étiquetées comprennent des données d'accéléromètre acquises à partir d'un accéléromètre d'un dispositif mobile qui est porté par chaque navetteur de la pluralité de navetteurs au cours d'un trajet, et dans lequel le trajet comprend des déplacements par l'intermédiaire d'une pluralité de modes de transport ;
déterminer une pluralité de segments stationnaires au cours du trajet de chaque navetteur de la pluralité de navetteurs, en :

(a) échantillonnant les données d'accéléromètre associées au trajet de chaque navetteur de la pluralité de navetteurs en une pluralité d'échantillons ;
(b) détectant une pluralité de points de fin et une pluralité de points de début dans la pluralité d'échantillons qui sont associés à une pluralité de segments non stationnaires du trajet, dans lequel

un point de fin indiquant la fin d'un segment non stationnaire en cours est marqué lorsque la différence entre une amplitude des données d'accéléromètre de deux échantillons consécutifs est inférieure ou égale à un seuil ($\delta$) ; et
un point de début indiquant le début d'un segment non stationnaire successif est marqué lorsque la différence entre les échantillons consécutifs est supérieure au seuil ($\delta$) ; et

(c) calculant une différence entre des points de fin et points de début consécutifs et en identifiant une durée temporelle entre chaque segment non stationnaire consécutif en tant qu'une durée d'arrêt, dans lequel un segment de trajet correspondant à une période de temps de la durée d'arrêt identifiée est considéré comme un segment stationnaire ;

éliminer les données d'accéléromètre associées à la pluralité de segments stationnaires ;
apprendre une séquence compacte auto-codée (AECS) généralisable des données d'accéléromètre associées à la pluralité de segments non stationnaires de chaque navetteur de la pluralité de navetteurs, en vue de générer des données d'entraînement, dans laquelle une séquence AECS de représentation latente de longueur fixe est utilisée pour capturer une pluralité de caractéristiques significatives des données de série temporelle en adaptant une diversité et une similitude à l'intérieur de données en tant qu'une séquence AECS invariante (I-AECS) ; et entraîner un apprenant à plusieurs étages afin de prédire la pluralité de modes de transport en appliquant un regroupement hiérarchique (HC) à l'aide de la séquence I-AECS sur les données d'entraînement, en vue de générer des groupes correspondant à la pluralité de modes de transport à l'aide d'une meilleure mesure de distance sélectionnée parmi une pluralité de mesures de distance pour le regroupement.

10. Ledit un ou lesdits plusieurs supports non transitoires de stockage d'informations lisibles par machine selon la revendication 9, dans lesquels l'apprenant à plusieurs étages entraîné prédit la pluralité de modes de transport associés à des données d'accéléromètre d'entrée d'un navetteur inconnu reçues en vue d'une inférence à l'aide de la représentation de séquence I-AECS.

11. Ledit un ou lesdits plusieurs supports non transitoires de stockage d'informations lisibles par machine selon la revendication 9, dans lesquels ladite une ou lesdites plusieurs instructions, lorsqu'elles sont exécutées par ledit un ou lesdits plusieurs processeurs matériels, amènent l'apprenant à plusieurs étages à apprendre la séquence AECS généralisable des données de série temporelle associées à la pluralité de segments non stationnaires par le biais de l'une des approches comprenant le fait de :

(a) préparer des données généralisables sur la base d'une divergence moyenne maximale (MMD) et de la meilleure mesure de distance pour construire une représentation latente généralisable de domaine comprenant une invariance de domaine afin d'apprendre la séquence I-AECS à l'aide d'une perte de reconstruction ; et
(b) apprendre une représentation généralisable de domaine comprenant une invariance de domaine, et la séquence I-AECS, en minimisant la distance de divergence MMD entre la séquence AECS des données d'entraînement et la séquence AECS de données de test, et en minimisant l'erreur de reconstruction en tant qu'un objectif d'apprentissage, défini en tant qu'une fonction de perte ;
apprendre la séquence AECS des données d'entraînement à l'aide de la perte de reconstruction dans un modèle d'autocodeur ; et
apprendre la représentation invariante de domaine des données de domaine de test à l'aide de la séquence AECS apprise des données d'entraînement et des données de domaine de test en tant qu'entrée.

12. Ledit un ou lesdits plusieurs supports non transitoires de stockage d'informations lisibles par machine selon la revendication 9, dans lesquels les données d'accéléromètre associées à la pluralité de segments non stationnaires sont regroupées (a) à un premier niveau en un transport correspondant à un transport à base de véhicule et à un mode sans transport associé au déplacement d'un navetteur sans utilisation de véhicule, (b) à un deuxième niveau basé sur un transport routier et un transport ferroviaire, et (c) à un troisième niveau, le groupe correspondant au transport routier est en outre divisé en « voiture-bus », le groupe associé au transport ferroviaire est en outre divisé en « train-métro ».

FIG. 1A

**FIG. 1B**

200

receiving an unlabeled time series data for a diversified population of a plurality of commuters, wherein the unlabeled time series data comprises accelerometer data acquired from an accelerometer of a mobile device carried by each of the plurality of commuters during a journey, wherein the journey comprises commute via a plurality of transport modes

202

determining, a plurality of stationary segments within the journey of each of the plurality of commuters by:

204

sampling the accelerometer data associated with the journey of each of the plurality of commuters into a plurality of samples

204a

detecting a plurality of end points and a plurality of start points within the plurality of samples that are associated with a plurality of non-stationary segments of the journey, wherein an end point indicating end of a current non-stationary segment is marked when difference between an amplitude of the accelerometer data of two consecutive samples is less or equal to a threshold, and a start point indicating start of a successive non-stationary segment is marked when the difference between the consecutive samples exceeds the threshold

204b

A

**FIG. 2A**

29

200

A

computing a difference between consecutive end points and start points and identifying time duration between each consecutive non-stationary segments as a stop duration, wherein a journey segment corresponding to a time period of the identified stop duration is considered as a stationary segment

204

204c

eliminating the accelerometer data associated with the plurality of stationary segments

206

learning a generalizable AECS of the accelerometer data associated with the plurality of non-stationary segments of each of the plurality of commuters to generate a training data, wherein a fixed length latent representation AECS is used to capture a plurality of significant features of the time series data adapting diversity and commonality inside data as Invariant AECS (I-AECS)

208

training a multistage learner for predicting the plurality of transport modes by applying Hierarchical Clustering (HC) using I-AECS on the training data to generate clusters corresponding to the plurality of transport modes using a best distance measure selected among a plurality of distance measures for clustering

210

**FIG. 2B**

**FIG. 3A**

**FIG. 3B**

**Training**

SHL dataset –
User 1+User 2+User 3

Identify
Road vs. Rail groups

Identify Car vs. Bus groups
Identify Train vs. Metro groups

Hierarchical model

**Inferencing**

TMD dataset – User 6
7 journey segments

Finding closeness to
road / rail training
groups for each segment

Road vs. Rail separation
Accuracy = **100 % (7/7)**

Finding closeness to car /
bus & train/ metro training
groups for each segment

Car vs Bus separation
Accuracy = **100 % (4/4)**
Train vs Metro separation
Accuracy = **100 % (3/3)**

FIG. 4

**FIG. 5A**

34

**FIG. 5B**

**FIG. 5C**

**FIG. 6A**

**FIG. 6B**

**FIG. 6C**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202221068018
- IN 202021015292

**Non-patent literature cited in the description**

- **SERVIZI VALENTINO et al.** *Transport behavior-mining from smartphones: a review*
- **BANDYOPADHYAY SOMA et al.** *Hierarchical Clustering using Auto-encoded Compact Representation for Time-series Analysis*
- **SOMA BANDYOPADHYAY et al.** *Unsupervised Driving Behavior Analysis using Representation Learning and Exploiting Group-based Training*
- **PRABONO ARIA GHORA et al.** *Atypical Sample Regularizer Autoencoder for Cross-Domain Human Activity Recognition*